(19) Europäisches Patentamt / European Patent Office / Office européen des brevets

(11) **EP 4 604 462 A1**

(12) **EUROPEAN PATENT APPLICATION**
published in accordance with Art. 153(4) EPC

(43) Date of publication:
**20.08.2025 Bulletin 2025/34**

(21) Application number: **22961673.5**

(22) Date of filing: **11.10.2022**

(51) International Patent Classification (IPC):
**H04L 27/00** (2006.01)

(52) Cooperative Patent Classification (CPC):
**H04L 27/00**

(86) International application number:
**PCT/CN2022/124616**

(87) International publication number:
**WO 2024/077479 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **WANG, Shukun**
  **Dongguan, Guangdong 523860 (CN)**
• **XU, Weijie**
  **Dongguan, Guangdong 523860 (CN)**

(74) Representative: **Penza, Giancarlo**
**Bugnion S.p.A.**
**Viale Lancetti, 17**
**20158 Milano (IT)**

(54) **ZERO-POWER-CONSUMPTION COMMUNICATION METHOD AND APPARATUS, AND TERMINAL DEVICE AND NETWORK DEVICE**

(57) Provided in the embodiments of the present application are a zero-power-consumption communication method and apparatus, and a terminal device and a network device. The method comprises: a terminal device determining a first channel and/or a second channel; and the terminal device receiving, on the first channel, a first signal, which is sent by a network device, and/or sending, on the second channel, a second signal to a network device.

A terminal device determines a first channel and/or a second channel — 1001

The terminal device receives a first signal transmitted by a network device on the first channel, and/or transmits a second signal to the network device on the second channel — 1002

**FIG. 10**

## Description

TECHNICAL FIELD

Embodiments of the present disclosure relate to the technical field of mobile communication, in particular to a zero power communication method and apparatus, a terminal device, and a network device.

BACKGROUND

A zero power terminal needs to harvest radio waves to obtain power before the zero power terminal drive itself to operate. Therefore, before obtaining power, the zero power terminal is in a "shutdown" state, and the zero power terminal cannot transmit and receive signals at this time. When multiple channels are deployed by the network, the zero power terminal may operate on any one of the channels after obtaining power and being "activated", but a network device generally communicates with the zero power terminal only on one of the channels.

After the zero power terminal obtains power and is "activated", it is a problem to be solved to determine on which channel to receive signals and/or on which channel to transmit signals, and then to perform signal interaction with the network device.

SUMMARY

Embodiments of the present disclosure provide a zero power communication method and apparatus, a terminal device, a network device, a chip, a computer readable storage medium, a computer program product, and a computer program.

The zero power communication method provided by the embodiments of the present disclosure includes the following operations.

A terminal device determines a first channel and/or a second channel.

The terminal device receives a first signal transmitted by a network device on the first channel, and/or the terminal device transmits a second signal to the network device on the second channel.

The zero power communication method provided by the embodiments of the present disclosure includes the following operations.

A network device determines a first channel and/or a second channel.

The network device transmits a first signal to a terminal device on the first channel, and/or the network device receives the first signal transmitted by the terminal device on the second channel.

The communication apparatus provided by the embodiments of the present disclosure is applied to a terminal device in a zero power communication system, and the apparatus includes a determining unit and a communication unit.

The determining unit is configured to determine a first channel and/or a second channel.

The communication unit is configured to receive a first signal transmitted by a network device on the first channel, and/or transmit a second signal to the network device on the second channel.

The communication apparatus provided by the embodiments of the present disclosure is applied to a network device in a zero power communication system, and the apparatus includes a determining unit and a communication unit.

The determining unit is configured to determine a first channel and/or a second channel.

The communication unit is configured to transmit a first signal to a terminal device on the first channel, and/or receive the first signal transmitted by the terminal device on the second channel.

The terminal device provided by the embodiments of the present disclosure includes a processor and a memory. The memory is configured to store a computer program, and the processor is configured to invoke and execute the computer program stored in the memory to perform the above zero power communication method.

The network device provided by the embodiments of the present disclosure includes a processor and a memory. The memory is configured to store a computer program, and the processor is configured to invoke and execute the computer program stored in the memory to perform the above zero power communication method.

The chip provided by the embodiments of the present disclosure is configured to implement the above zero power communication method.

Specifically, the chip includes a processor. The processor is configured to invoke and execute a computer program from a memory to cause a device installed with the chip to perform the above zero power communication method.

The computer readable storage medium provided by the embodiments of the present disclosure is configured to store a computer program. The computer program causes a computer to perform the above zero power communication method.

The computer program product provided by the embodiments of the present disclosure includes computer program instructions. The computer program instructions cause a computer to perform the above zero power communication method.

The computer program provided by the embodiments of the present disclosure causes a computer to perform the above zero power communication method when being executed on the computer.

According to the above technical solutions, the terminal device determines the first channel for signal reception and/or the second channel for signal transmission, so that when multiple channels are deployed by the network, the terminal device can perform signal interaction with the network device by determining an appropriate channel. For signal reception, the terminal device does not need to monitor signals from the network device on all channels, but only needs to monitor one channel (i.e., the first channel), which can achieve the purpose of power saving and reduce the working complexity of the terminal device. For signal transmission, the terminal device does not need to transmit signals to the network device on all channels, but only needs to transmit signals to the network device on one channel (i.e., the second channel), which can achieve the purpose of saving power and reduce the working complexity of the terminal device.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure. In the drawings:

FIG. 1 is a schematic diagram of zero power communication according to an embodiment of the present disclosure.
FIG. 2 is a schematic diagram of power harvesting according to an embodiment of the present disclosure.
FIG. 3 is a schematic diagram of back scattering according to an embodiment of the present disclosure.
FIG. 4 is a circuit schematic diagram of resistance load modulation according to an embodiment of the present disclosure.
FIG. 5 is a schematic diagram of Non Return Zero (NRZ) coding according to an embodiment of the present disclosure.
FIG. 6 is a schematic diagram of Manchester coding according to an embodiment of the present disclosure.
FIG. 7 is a schematic diagram of Unipolar Return Zero (RZ) coding according to an embodiment of the present disclosure.
FIG. 8 is a schematic diagram of Differential Binary Phase (DBP) coding according to an embodiment of the present disclosure.
FIG. 9 is a schematic diagram of Miller coding according to an embodiment of the present disclosure.
FIG. 10 is a first schematic flowchart of a zero power communication method according to an embodiment of the present disclosure.
FIG. 11 is a schematic diagram of a frequency position of a power sourcing channel according to an embodiment of the present disclosure.
FIG. 12-1 is a schematic diagram of determining an index along a clockwise direction in cyclic indexes according to an embodiment of the present disclosure.
FIG. 12-2 is a schematic diagram of determining an index along a counterclockwise direction in cyclic indexes according to an embodiment of the present disclosure.
FIG. 13 is a second schematic flowchart of a zero power communication method according to an embodiment of the present disclosure.
FIG. 14 is a first schematic diagram of a structural composition of a communication apparatus according to the embodiment of the present disclosure.
FIG. 15 is a second schematic diagram of a structural composition of a communication apparatus according to the embodiment of the present disclosure.
FIG. 16 is a schematic structural diagram of a communication device according to an embodiment of the present disclosure.
FIG. 17 is a schematic structural diagram of a chip according to an embodiment of the present disclosure.
FIG. 18 is a schematic block diagram of a communication system according to an embodiment of the present disclosure.

DETAILED DESCRIPTION

In order to facilitate understanding of the technical solutions of the embodiments of the present disclosure, the related technologies of the embodiments of the present disclosure will be described below. The related technologies below, as optional solutions, may be arbitrarily combined with the technical solutions of the embodiments of the present disclosure, all of which belong to the scope of protection of the embodiments of the present disclosure.

Principle of zero power communication technology

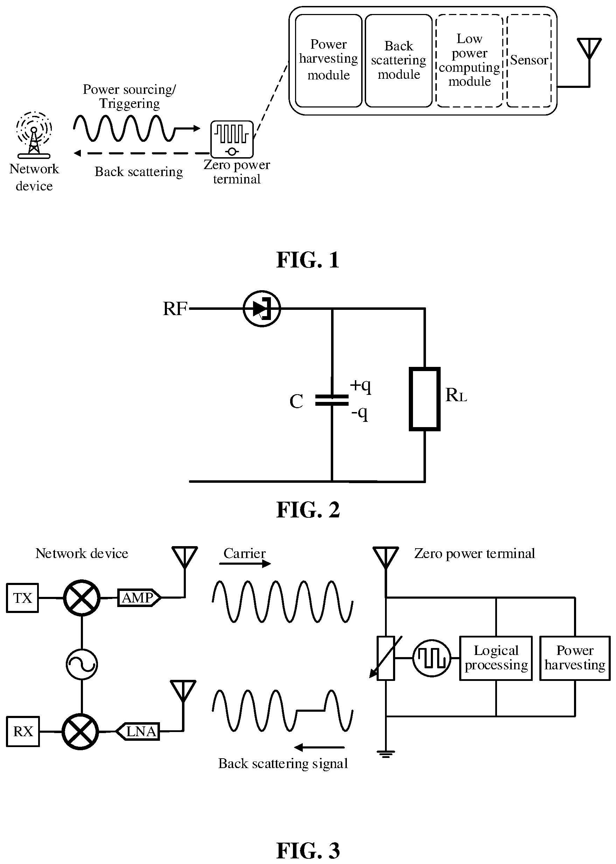

Zero power communication uses power harvesting and back scattering technologies. As illustrated in FIG. 1, a zero power communication system includes a network device and a zero power terminal. The network device is used to transmit a power sourcing signal (i.e., a radio wave) and a downlink communication signal to the zero power terminal, and receive a backscatter signal from the zero power terminal. As an example, the zero power terminal includes a power harvesting module, a back scattering module, and a low power computing module. In addition, the zero power terminal may also be provided with a memory and/or a sensor. The memory is used to store some basic information (such as an object identifier, etc.), and the sensor is used to obtain sensing data such as ambient temperature and ambient humidity.
The key technologies of zero power communication are further explained below.

(1) Power Harvesting

FIG. 2 is a schematic diagram of power harvesting. As illustrated in FIG. 2, a power harvesting module harvests space electromagnetic wave power based on the principle of electromagnetic induction, and then obtains the power required to drive the zero power terminal to drive the load circuit (such as driving the low power computing module, sensor, etc.). Therefore, the zero power terminal does not require traditional batteries and realizes battery-free communication.

As an example, the power harvesting module refers to a radio frequency power harvesting module. The radio frequency power harvesting module may harvest power carried by radio waves in space to realize the harvesting of space electromagnetic wave power.

(2) Back scattering

FIG. 3 is a schematic diagram of back scattering. As illustrated in FIG. 3, a zero power terminal receives a radio signal transmitted by the network device (that is, the carrier in FIG. 3), modulates the radio signal, that is, loads information to be transmitted on the radio signal, and radiates the modulated signal from the antenna. This information transmission process is called the back scattering.

The back scattering is closely related to the function of load modulation. The load modulation is a method often used by the zero power terminal to load information. The load modulation adjusts and controls circuit parameters of the oscillation loop of the zero power terminal according to the beat of the data stream to cause the magnitude and/or phase of the impedance of the zero power terminal to change accordingly, thereby completing the modulation process. The load modulation technology mainly includes resistance load modulation and capacitance load modulation.

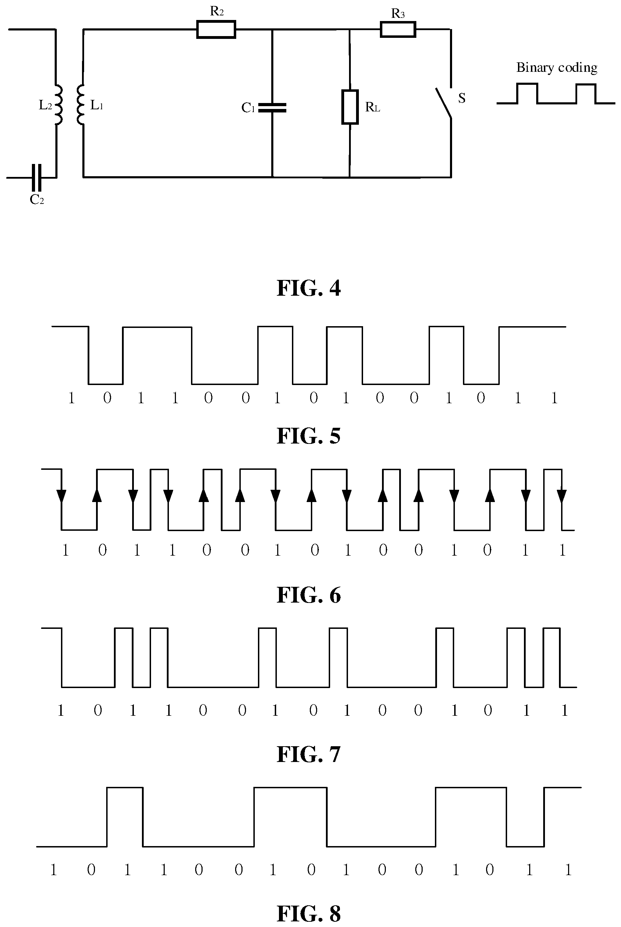

As illustrated in FIG. 4, in the resistance load modulation, the load is connected in parallel with a resistor, which is called a load modulation resistor. The resistor is turned on or off based on the control of the binary data stream. The on-off of the resistor will cause the change of the circuit voltage, so Amplitude Shift Keying (ASK) is realized, that is, the signal modulation is realized by adjusting the amplitude of the backscatter signal of the zero power terminal. Similarly, in the capacitance load modulation, the load is connected in parallel with a capacitor, which is called a load modulation capacitor. The capacitor replaces the load modulation resistor in FIG. 4. The resonance frequency of the circuit may be changed by on-off of the capacitor, so Frequency Shift Keying (FSK) is realized, that is, the signal modulation is realized by adjusting the operating frequency of the backscatter signal of the zero power terminal.

The zero power terminal performs information modulation on the incoming signal by means of load modulation, thereby implementing the back scattering process. Therefore, the zero power terminal has the following significant advantages. On the one hand, the zero power terminal does not actively transmit signals, and therefore does not require complex radio frequency links such as power amplifiers, radio frequency filters, etc. On the other hand, the zero power terminal does not need to actively generate high-frequency signals, and therefore does not need a high-frequency crystal oscillator. On the other hand, with the help of back scattering, the zero power terminal does not need to consume its own power in the transmission process.

(3) Power sourcing signal and trigger signal in the zero power communication system

Power sourcing signal

The power sourcing signal is used to provide power to a zero power device.

In terms of a carrier for the power sourcing signal, a transmitting end for the power sourcing signal may be a base station, an intelligent gateway, a charging station, a micro base station, a smartphone, or the like.

In terms of a frequency band of the power sourcing signal, the radio wave used as the power sourcing signal may be in low frequency, intermediate frequency, high frequency, or the like.

In terms of a waveform of the power sourcing signal, the radio wave used as the power sourcing signal may be a sine wave, a square wave, a triangular wave, a pulse, a rectangular wave, or the like.

In addition, the power sourcing signal may be a continuous wave or a discontinuous wave (i.e., allowing interruption for a certain duration).

The power sourcing signal may be, but is not limited to, a certain physical signal specified in the 3GPP standard, such as a Sounding Reference Signal (SRS), a Physical Uplink Shared Channel (PUSCH), a Physical Random Access Channel (PRACH), a Physical Uplink Control Channel (PUCCH), a Physical Downlink Control Channel (PDCCH), a Physical Downlink Shared Channel (PDSCH), a Physical Broadcast Channel (PBCH), or the like. Without being limited thereto, the power sourcing signal may be a new signal.

Trigger signal

The trigger signal is used to trigger a zero power device to communicate. In other words, the trigger signal is used to schedule the zero power device.

In terms of a carrier for the trigger signal, a transmitting end for the trigger signal may be a base station, an intelligent gateway, a charging station, a micro base station, a smart phone, or the like.

In terms of a frequency band of the trigger signal, the radio wave used as the trigger signal may be in low frequency, intermediate frequency, high frequency, or the like.

In terms of a waveform of the trigger signal, the radio wave used as the trigger signal may be a sine wave, a square wave, a triangular wave, a pulse, a rectangular wave, or the like.

Furthermore, the trigger signal may be a continuous wave or a discontinuous wave (i.e., allowing interruption for a certain duration).

The trigger signal may be, but is not limited to, a certain physical signal specified in the 3GPP standard, such as an SRS, a PUSCH, a PRACH, a PUCCH, a PDCCH, a PDSCH, a PBCH, or the like. Without being limited thereto, the trigger signal may be a new signal.

Coding method for zero power communication

The data transmitted by the zero power terminal may use different forms of codes to represent "1" and "0" in binary (i.e., binary "1" and "0"). A radio frequency identification system typically use one of the following coding methods: Non Return Zero (NRZ) coding, Manchester coding, Unipolar RZ coding, Differential Binary Phase (DBP) coding, Miller coding, and differential coding. Different forms of codes are used to represent binary "1" and "0", which may be understood as that different pulse signals are used to represent 0 and 1. The several coding methods will be described below.

(1) NRZ coding

In the NRZ coding method, as illustrated in FIG. 5, a high level is used to represent a binary "1" and a low level is used to represent a binary "0".

(2) Manchester coding

The Manchester coding is also called Split-Phase Coding. In the Manchester coding, a value of a bit is represented by the change in level (rising/falling) at half bit period within the bit length. As illustrated in FIG. 6, the negative transition at half the bit period represents a binary "1", and the positive transition at half the bit period represents a binary "0".

Manchester coding is usually used for data transmission from the zero power terminal to the network device when using back scattering modulation or load modulation of a carrier, because it is conducive to finding errors in data transmission. The reason is that within the bit length, the state of "no change" is not allowed. When the data bits transmitted by multiple zero power terminals simultaneously have different values, the received rising edge and falling edge cancel each other out, which results in an uninterrupted carrier signal over the entire bit length. Since this state is not allowed, the network device can use this error to determine the specific location where the collision occurs.

(3) Unipolar RZ coding

In the Unipolar RZ coding, as illustrated in FIG. 7, the high level in the first half bit period represents a binary "1", and the low level signal lasting for the entire bit period represents a binary "0". The Unipolar RZ coding may be used to extract a bit synchronization signal.

(4) DBP coding

In the DBP coding, as illustrated in FIG. 8, any edge in half bit period represents a binary "0", and no edge is a binary "1". Furthermore, at the beginning of each bit period, the levels are inverted. Therefore, the bit beat is relatively easy to reconstruct for the receiving end.

(5) Miller coding

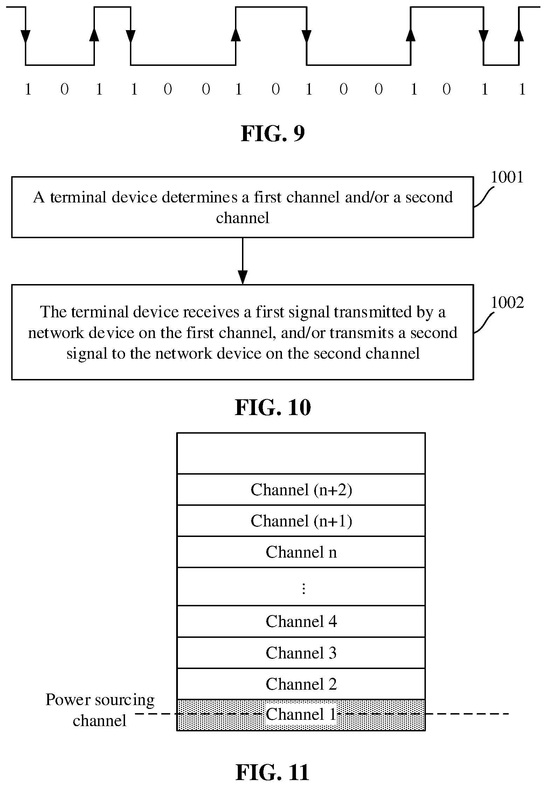

In the Miller coding, any edge in half bit period represents a binary "1", and a level that remains unchanged over the next bit period represents a binary "0". As illustrated in FIG. 9, a level alternation occurs at the beginning of the bit period. Therefore, the bit beat is relatively easy to reconstruct for the receiving end.

(6) Differential coding

In the differential coding, each binary "1" to be transmitted causes a change in signal level, and for a binary "0", the signal level remains unchanged.

Classification of zero power terminals

Based on the power source and usage manner of zero power terminals, the zero power terminals may be classified into the following types.

(1) Passive zero power terminals

A zero power terminal does not require a built-in battery. When the zero power terminal approaches a network device, the zero power terminal is in the near-field range formed by radiation of an antenna of the network device. The antenna of the zero power terminal generates induced current through electromagnetic induction. The induced current drives the low power computing module (that is, the low power chip circuit) of the zero power terminal to operate, so as to realize demodulation of the forward link signal, modulation of the backward link signal. For the back scattering link, the zero power terminal uses the back scattering manner to perform signal transmission.

It can be seen that a passive zero power terminal does not require a built-in battery to drive neither the forward link nor the backward link, and the passive zero power terminal is a true zero power terminal.

Since the passive zero power terminal does not require batteries, the radio frequency circuit and baseband circuit of the passive zero power terminal are very simple, for example, a Low Noise Amplifier (LNA), a Power Amplifier (PA), a crystal oscillator, an Analog-to-Digital Converter (ADC), etc., are not required, so the passive zero power terminal has many advantages such as small size, light weight, low price and long service life.

(2) Semi-passive zero power terminals

A semi-passive zero power terminal itself is not equipped with a conventional battery, but can use a power harvesting module to harvest radio wave power and store the harvested power in a power storage unit (such as a capacitor). After obtaining power, the power storage unit can drive the low power computing module (that is, the low power chip circuit) of the zero power terminal to operate, so as to realize demodulation of the forward link signal and modulation of the backward link signal. For the back scattering link, the zero power terminal uses the back scattering manner to perform signal transmission.

It can be seen that the semi-passive zero power terminal does not require a built-in battery to drive neither the forward link nor the backward link. Although the power stored by the capacitor is used in operation, the power comes from the power of radio waves harvested by the power harvesting module, so the semi-passive zero power terminal is also a true zero power terminal.

The semi-passive zero power terminal inherits many advantages of the passive zero power terminal, so it has many advantages such as small size, light weight, low price and long service life.

(3) Active zero power terminals

The zero power terminals used in some scenarios may also be active zero power terminals. Such terminals may be equipped with built-in batteries. The battery is used to drive the low power computing module (that is, the low power chip circuit) of the zero power terminal to operate, so as to realize demodulation of the forward link signal and modulation of the backward link signal. However, for the back scattering link, the zero power terminal uses the back scattering manner to perform signal transmission. Therefore, zero power of this type of terminals is mainly reflected in the fact that the signal transmission of the backward link does not require the power of the terminal itself, but uses the back scattering manner.

The active zero power terminal provides power to the radio frequency chip by a built-in battery, so as to increase communication distance and improve communication reliability. Therefore, the active zero power terminal may be applied in some scenarios that have relatively high requirements for the communication distance and communication delay.

Cellular Passive Internet of Things (IoT)

With the increase of industry applications, there are more and more types of connectors and application scenarios, and there will also be higher requirements for the price and power consumption of communication terminals. The application of battery-free, low-cost passive IoT devices has become the key technology of cellular IoT, which enriches the types and quantities of network linking terminals and truly realizes the Internet of Everything. The passive IoT devices may be based on zero power communication technologies, such as Radio Frequency Identification (RFID) technology, and extends on this basis to be applied for the cellular IoT.

The zero power terminal needs to harvest the power of radio waves transmitted by the network device, and may drive itself to operate only after obtaining the power. Therefore, before obtaining power, the zero power terminal is in a "shutdown" state, that is, the zero power terminal cannot receive signals transmitted by the network device or transmit signals to the network device in such case. When multiple channels are deployed by the network, the zero power terminal may operate on any one of the channels after obtaining power and being "activated", but the network device generally communicates with the zero power terminal only on one of the channels.

After the zero power terminal obtains power and is "activated", it is a problem that needs to be solved to determine on which channel to receive signals and/or on which channel to transmit signals, and then to perform signal interaction with network device. Therefore, the following technical solutions according to the embodiments of the present disclosure are proposed.

In order to facilitate understanding of the technical solutions of the embodiments of the present disclosure, the technical solutions of the present disclosure will be described in detail below with reference to specific embodiments. The above related technologies, as optional solutions, may be arbitrarily combined with the technical solutions of the embodiments of the present disclosure, and all of them belong to the scope of protection of the embodiments of the present disclosure. Embodiments of the present disclosure include at least part contents of the following.

It should be noted that the technical solutions of the embodiments of the present disclosure are applied to a zero power communication system. The "terminal device" in the embodiments of the present disclosure may be a zero power terminal, such as a RFID device. A typical RFID device is an RFID tag, which is also referred to as a "radio frequency tag" or an "electronic tag". The network device in the embodiments of the present disclosure may be a base station, an access node, a Transmission and Receiving Point (TRP), or the like.

It should be noted that "system information" in the embodiments of the present disclosure may be replaced with "common information", "network system information", "network gateway information", "cell information", or the like.

It should be noted that the "shifting amount" in the embodiments of the present disclosure may be replaced with "offset", "cyclic shifting amount", "offset amount", or the like.

It should be noted that since "an index of a channel" in the embodiments of the present disclosure corresponds to an "a frequency position of a channel", the description of "an index of a channel" may be replaced with "a frequency position of a channel".

FIG. 10 is a first schematic flowchart of a zero power communication method according to an embodiment of the present disclosure. As illustrated in FIG. 10, the zero power communication method includes the following operations.

In 1001, a terminal device determines a first channel and/or a second channel.

In some embodiments, the network deploys multiple channels (for example, N channels, N being an integer greater than 1). The channels may be cell channels (that is, the multiple channels are not distinguished into uplink channels and downlink channels). The terminal device determines the first channel and/or the second channel from the multiple channels.

In some embodiments, the network deploys multiple downlink channels and/or multiple uplink channels (for example, N1 downlink channels and/or N2 uplink channels, N1 and N2 being integers greater than 1). The terminal device determines the first channel from the multiple downlink channels, and/or determines the second channel from the multiple uplink channels.

In the embodiments of the present disclosure, the first channel is used for signal reception by the terminal device, and the first channel is a downlink channel. The second channel is used for signal transmission by the terminal device, and the second channel is an uplink channel. In a scenario, after obtaining power and being "activated", the terminal device establishes an initial connection with the network device, and starts to receive (or monitor) a signal transmitted by the network device and/or transmit a signal to the network device. Here, the channel on which the terminal device starts to receive a signal is the first channel. It may be understood that the first channel may also be referred to as an initial downlink channel. Similarly, the channel on which the terminal device starts to transmit a signal is the second channel. It may be understood that the second channel may also be referred to as an initial uplink channel.

In 1002, the terminal device receives a first signal transmitted by a network device on the first channel, and/or transmits a second signal to the network device on the second channel.

In some embodiments, the first signal may be a trigger signal. The implementation of the trigger signal may refer to the description of the above related art.

In some embodiments, the second signal may be a signal scheduled (or triggered) by the first signal. That is, the first signal is used to trigger the terminal device to transmit the second signal to the network device. As an example, the second signal carries information reported by the terminal device to the network device. The type of information reported by the terminal device to the network device may be determined according to a specific application, for example, the information may be location information, logistics status information, environmental information, etc.

In the embodiments of the present disclosure, determination of the first channel and/or the second channel by the terminal device may be implemented through the following solutions.

Solution 1

Solution 1-1

In some embodiments, the terminal device determines the first channel based on a first rule. The first rule is related to at least one of the following parameters: a first parameter, a second parameter or a third parameter.

The first parameter represents a number of channels deployed by the network.

The second parameter represents an identifier associated with the terminal device.

The third parameter represents an index of a first target channel.

The number of channels deployed by the network may refer to the number of cell channels deployed by the network (for a case that channels are not distinguished into uplink channels and downlink channels). Alternatively, the number of channels deployed by the network may refer to the number of downlink channels deployed by the network (for a case that channels are distinguished into uplink channels and downlink channels).

In some embodiments, a value of the first parameter is determined by at least one of the following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

The identifier associated with the terminal device includes at least one of the following: an identifier of the terminal device; a service identifier of the terminal device; or a group identifier of the terminal device.

In some embodiments, a value of the second parameter is determined through information written into the terminal device.

The first target channel may be a channel that can be received by the terminal device before the terminal device establishes an initial connection with the network device, such as a power sourcing channel, a synchronization channel, a channel on which system information is located, or the like. As illustrated in FIG. 11, n+2 channels are deployed by the network, n is a positive integer, and the first target channel is the power sourcing channel, i.e., Channel 1.

In some embodiments, the index of the first target channel is determined through at least one of the following manners.

Manner 1: The index of the first target channel is determined by receiving a target signal. The target signal is a signal transmitted on the first target channel. As an example, the target signal includes at least one of the following: a power sourcing signal, system information, a synchronization signal, or synchronization information.

The terminal device may detect (or receive) the target signal on each channel deployed by the network. If the target signal is detected on a certain channel, it may be considered that the channel is the first target channel, and then the index of the first target channel may be determined.

Manner 2: The index of the first target channel is determined through system information of the network device.

The network device may configure the index of the first target channel in the system information, and the terminal device may acquire the index of the first target channel through the system information.

In the embodiments of the present disclosure, the operation that the terminal device determines the first channel based on the first rule may be implemented through the following options.

Option 1-1): The terminal device determines the index of the first channel to be:

ID mod N;

where ID represents the second parameter, N represents the first parameter, and mod represents a modulo operation.

As an example, the number N of channels deployed by the network is 20 (N = 20), and the channels are numbered from 0 to 19 in an order, such as from high frequency to low frequency or from low frequency to high frequency. If the identifier (ID) associated with the terminal device is 201 (ID = 201), the index of the first channel is 1 (201 mod 20 = 1). The terminal device receives (or monitors) the first signal (such as a trigger signal) transmitted by the network device on the channel with the index of 1.

Option 1-2): The terminal device determines a first shifting amount. The terminal device determines the index of the first channel based on the first shifting amount and the third parameter. The terminal device determines the index of the first channel to be:

$$(\text{Index T1} + \Delta 1) \bmod N;$$

where Index T1 represents the third parameter, and $\Delta 1$ represents the first shifting amount.

As an example, the number N of channels deployed by the network is 20 (N = 20), and the channels are numbered from 0 to 19 in a certain order, such as from high frequency to low frequency or from low frequency to high frequency. If the first shifting amount $\Delta 1$ is 2 ($\Delta 1 = 2$) and Index T1 is 15 (Index T1 = 15), the index of the first channel is 7 ((15 +2) mod 20 = 7). The terminal device receives (or monitors) the first signal (such as a trigger signal) transmitted by the network device on the channel with the index of 7.

Option 1-3): The terminal device determines a first shifting amount. The terminal device determines the index of the first channel based on the first shifting amount and the third parameter. The terminal device determines the index of the first channel to be an index obtained after Index T1 is moved clockwise by $\Delta 1$ indexes in cyclic indexes, or determines the index of the first channel to be an index obtained after Index T1 is moved counterclockwise by $\Delta 1$ indexes in the cyclic indexes.

Index T1 represents the third parameter, $\Delta 1$ represents the first shifting amount, and the cyclic indexes include N indexes.

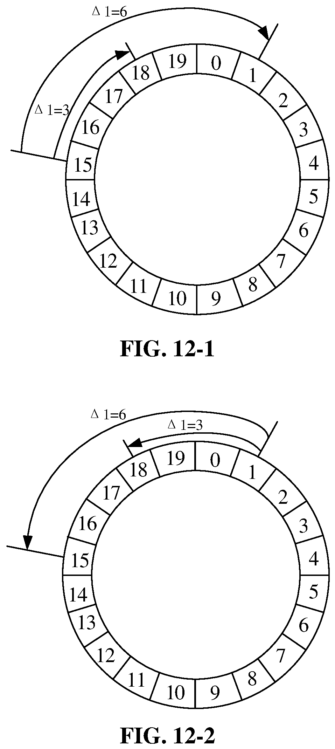

As an example, as illustrated in FIG. 12-1, the number N of channels deployed by the network is 20 (N = 20), and the channels are cyclically numbered from 0 to 19 in an order, such as from high frequency to low frequency or from low frequency to high frequency, to form cyclic indexes. It is assumed that the first shifting amount $\Delta 1$ is 3 ($\Delta 1 = 3$) and Index T1 is 15 (Index T1 = 15), then the index of the first channel is the index 18 obtained after the index 15 is moved clockwise by three indexes. The terminal device receives (or monitors) the first signal (such as a trigger signal) transmitted by the network device on the channel with the index 18. It is assumed that the first shifting amount $\Delta 1$ is 6 ($\Delta 1 = 6$) and Index T1 is 15 (Index T1 = 15), then the index of the first channel is the index 1 obtained after the index 15 is moved clockwise by six indexes. The terminal device receives (or monitors) the first signal (such as a trigger signal) transmitted by the network device on the channel with the index 1.

As an example, as illustrated in FIG. 12-2, the number N of channels deployed by the network is 20 (N = 20), and the channels are cyclically numbered from 0 to 19 in a certain order, such as from high frequency to low frequency or from low frequency to high frequency, to form cyclic indexes. It is assumed that the first shifting amount $\Delta 1$ is 3 ($\Delta 1 = 3$) and Index T1 is 1 (Index T1 = 1), then the index of the first channel is the index 18 obtained after the index 1 is moved counterclockwise by three indexes. The terminal device receives (or monitors) the first signal (such as a trigger signal) transmitted by the network device on the channel with the index 18. It is assumed that the first shifting amount $\Delta 1$ is 6 ($\Delta 1 = 6$) and Index T1 is (Index T1 = 1), then the index of the first channel is the index 15 obtained after the index 1 is moved counterclockwise by six indexes. The terminal device receives (or monitors) the first signal (such as a trigger signal) transmitted by the network device on the channel with the index 15.

For the above Option 1-2) and Option 1-3), in some embodiments, the first shifting amount is determined in at least one of the following manners.

Manner A-1): The first shifting amount is determined according to the formula: ID mod N; where ID represents the second parameter, N represents the first parameter, and mod represents a modulo operation.

Manner A-2): The first shifting amount is determined through system information of the network device.

Manner A-3): The first shifting amount is determined through predefined information of a zero power communication system.

Manner A-4): The first shifting amount is determined through a spectrum supported by the terminal device.

Solution 1-2

In some embodiments, the terminal device performs signal detection on all or part of channels deployed by the network, and determines the first channel based on detection results. The first channel is a channel on which signal transmission from the network device is detected.

The terminal device may detect (or receive) signals on each channel deployed by the network. If a signal is detected on a channel, the channel is considered as the first channel.

Solution 2

In some embodiments, the terminal device determines the second channel based on a second rule. The second rule is related to at least one of the following parameters: the first parameter, the second parameter or the fourth parameter.

The first parameter represents a number of channels deployed by the network.

The second parameter represents an identifier associated with the terminal device.

The fourth parameter represents an index of the second target channel.

The number of channels deployed by the network may refer to the number of cell channels deployed by the network (for a case that channels are not distinguished into uplink channels and downlink channels). Alternatively, the number of channels deployed by the network may refer to the number of uplink channels deployed by the network (for a case that channels are distinguished into uplink channels and downlink channels).

In some embodiments, a value of the first parameter is determined through at least one of the following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

The identifier associated with the terminal device includes at least one of the following: an identifier of the terminal device; a service identifier of the terminal device; or a group identifier of the terminal device.

In some embodiments, a value of the second parameter is determined through information written into the terminal device.

In some embodiments, the second target channel may be the first channel on which the terminal device receives the first signal, for example, a channel on which a trigger signal is located.

The terminal device may determine, according to Solution 1 mentioned above, the index of the first channel, that is, the index of the second target channel.

In the embodiments of the present disclosure, the operation that the terminal device determines the second channel based on the second rule may be implemented through the following options.

Option 2-1): The terminal device determines a second shifting amount. The terminal device determines the index of the second channel based on the second shifting amount and the fourth parameter. The terminal device determines the index of the second channel to be:

$$(\text{Index T2} + \Delta 2) \bmod \text{N};$$

where Index T2 represents the fourth parameter, and $\Delta 2$ represents the second shifting amount.

As an example, the number N of channels deployed by the network is 20 (N = 20), and the channels are numbered from 0 to 19 in an order, such as from high frequency to low frequency or from low frequency to high frequency. If the second shifting amount $\Delta 2$ is 3 ($\Delta 2 = 3$) and Index T2 is 15 (Index T2 = 15), the index of the second channel is 8 ((15 +3) mod 20 = 8). The terminal device transmits the second signal to the network device on the channel with the index of 8.

Option 2-2): The terminal device determines a second shifting amount. The terminal device determines the index of the second channel based on the second shifting amount and the fourth parameter. The terminal device determines the index of the second channel to be an index obtained after Index T2 is moved clockwise by $\Delta 2$ indexes in cyclic indexes, or determines the index of the second channel to be an index obtained after Index T2 is moved counterclockwise by $\Delta 2$ indexes in the cyclic indexes.

Index T2 represents the fourth parameter, $\Delta 2$ represents the second shifting amount, and the cyclic indexes include N indexes.

As an example, the number N of channels deployed by the network is 20 (N = 20), and the channels are cyclically numbered from 0 to 19 in an order, such as from high frequency to low frequency or from low frequency to high frequency. It is assumed that the second shifting amount $\Delta 2$ is 3 ($\Delta 2 = 3$) and Index T2 is 15 (Index T2 = 15), then the index of the second channel is the index 18 obtained after the index 15 is moved clockwise by three indexes. The terminal device transmits the second signal to the network device on the channel with the index 18. It is assumed that the second shifting amount $\Delta 2$ is 6 ($\Delta 2 = 6$) and Index T2 is 15 (Index T2 = 15), then the index of the second channel is the index 1 obtained after the index 15 is moved clockwise by six indexes. The terminal device transmits the second signal to the network device on the channel with the index 1.

For the above Option 2-1) and Option 2-2), in some embodiments, the second shifting amount is determined in at least one of the following manners.

Manner B-1): The second shifting amount is determined according to the formula: ID mod N. ID represents the second parameter, N represents the first parameter, and mod represents a modulo operation.

Manner B-2): The second shifting amount is determined through system information of the network device.

Manner B-3): The second shifting amount is determined through the first signal from the network device.

Manner B-4): The second shifting amount is determined through predefined information of a zero power communication system.

Manner B-5): The second shifting amount is determined through a spectrum supported by the terminal device.

In some embodiments, the terminal device receives system information transmitted by the network device. The system information may include any information according to the power sourcing demand, which may roughly include system information configured by the network itself and system information for auxiliary power sourcing. For example, the system information includes at least one piece of the following: network identification information, network radio resource information, or access resource information.

The network identification information is used to identify the network. For example, the network identification information may include information such as a name of the network device, an identifier of the network device, or an area code corresponding to the network device.

The network radio resource information includes at least one of the following: a number of channels deployed by the network, an index of the first target channel (for example, an index of a power sourcing channel), the first shifting amount, the second shifting amount, or spectrum information. The first shifting amount is used to determine an index of the first channel, and the second shifting amount is used to determine an index of the second channel.

The access resource information includes access channel information and/or access sequence information. If the terminal device needs to acquire radio resources and actively access the network to transmit information or data, the resource and signal sequence used by the terminal device to access the network are needed to be configured through the system information for the terminal device to acquire radio resources and access the network.

In some embodiments, the system information is transmitted on all or part of channels deployed by the network. For example, the network device transmits system information on all channels deployed by the network, and the terminal device may receive the system information on any one channel.

In some embodiments, the system information is transmitted periodically or the system information is triggered based on an event. For example, the event is that the network device plans to transmit a trigger signal to the terminal device, to trigger the terminal device to report information. Before the event, i.e., the network device transmits the trigger signal, the network device transmits the system information, so that the terminal device can know the channel on which the trigger signal is located, and monitor the trigger signal only on the channel.

In some embodiments, the terminal device reflects the system information. The reflected system information is used to instruct the network device that the terminal device requests to transmit the second signal to the network device. If the terminal device needs to actively access the network to transmit information or data, the terminal device may reflect the system information periodically transmitted by the network device, and indicate to the network device through the reflected system information that the terminal device requests to transmit information or data to the network device, thereby triggering the network device to transmit a trigger signal to the terminal device, and then the terminal device may be triggered to report the information or data to the network device through the trigger signal.

In addition to the terminal device side, the technical solutions of the embodiments of the present disclosure may also be applied to the network device side. The terminal device and the network device determine the first channel and/or the second channel by same rules, so as to ensure that the terminal device and the network device are consistent in determining the first channel and/or the second channel, thereby ensuring effective communication between the terminal device and the network device.

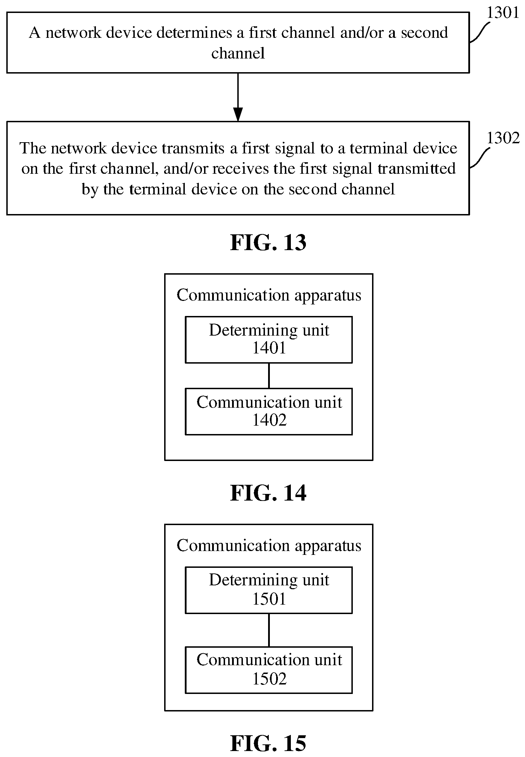

FIG. 13 is a second schematic flowchart of a zero power communication method according to an embodiment of the present disclosure. As illustrated in FIG. 13, the zero power communication method includes the following operations.

In 1301, a network device determines a first channel and/or a second channel.

In the embodiments of the present disclosure, the first channel is used for signal transmission by the network device, and belongs to a downlink channel. The second channel is used for signal reception by the network device, and belongs to an uplink channel. In a scenario, after obtaining power and being "activated", the terminal device establishes an initial connection with the network device, and the network device starts to transmit a signal to the terminal device and/or receive a signal transmitted by the terminal device. The channel on which the network device transmits a signal to the terminal device is the first channel. It may be understood that the first channel may also be referred to as an initial downlink channel. Similarly, the channel on which the network device receives a signal transmitted by the terminal device is the second channel. It may be understood that the second channel may also be referred to as an initial uplink channel.

In 1302, the network device transmits a first signal to a terminal device on the first channel, and/or receives the first signal transmitted by the terminal device on the second channel.

In some embodiments, the first signal may be a trigger signal. The implementation of the trigger signal may refer to the description of the above related art.

In some embodiments, the second signal may be a signal scheduled (or triggered) by the first signal. That is, the first signal is used to trigger the terminal device to transmit the second signal to the network device. As an example, the second signal carries information reported by the terminal device to the network device. The type of information reported by the terminal device to the network device may be determined according to a specific application, for example, the information may be location information, logistics status information, environmental information, etc.

In the embodiments of the present disclosure, determination of the first channel and/or the second channel by the network device may be implemented through the following solutions.

Solution 1

Solution 1-1

In some embodiments, the network device determines the first channel based on a first rule. The first rule is related to at least one of the following parameters: the first parameter, the second parameter or the third parameter.

The first parameter represents a number of channels deployed by the network.

The second parameter represents an identifier associated with the terminal device.

The third parameter represents an index of the first target channel.

In some embodiments, a value of the first parameter is determined by at least one of the following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

The identifier associated with the terminal device includes at least one of the following: an identifier of the terminal device; a service identifier of the terminal device; or a group identifier of the terminal device.

In some embodiments, a value of the second parameter is determined through information written into the terminal device.

The first target channel may be a power sourcing channel, a synchronization channel, a channel on which system information is located, or the like.

In the embodiments of the present disclosure, the operation that the network device determines the first channel based on the first rule may be implemented through the following options.

Option 1-1): The network device determines the index of the first channel to be:
ID mod N.

ID represents the second parameter, N represents the first parameter, and mod represents a modulo operation.

Option 1-2): The network device determines a first shifting amount. The network device determines the index of the first channel based on the first shifting amount and the third parameter. The network device determines the index of the first channel to be:

$$(\text{Index } T1 + \Delta 1) \bmod N.$$

Index T1 represents the third parameter, and $\Delta 1$ represents the first shifting amount.

Option 1-3): The network device determines a first shifting amount. The network device determines the index of the first channel based on the first shifting amount and the third parameter. The network device determines the index of the first channel to be an index obtained after Index T1 is moved clockwise by $\Delta 1$ indexes in cyclic indexes, or determines the index of the first channel to be an index obtained after Index T1 is moved counterclockwise by $\Delta 1$ indexes in the cyclic indexes.

Index T1 represents the third parameter, $\Delta 1$ represents the first shifting amount, and the cyclic indexes include N indexes.

For the above Option 1-2) and Option 1-3), in some embodiments, the first shifting amount is determined in at least one of the following manners.

Manner A-1): The first shifting amount is determined according to the formula: ID mod N. ID represents the second parameter, N represents the first parameter, and mod represents a modulo operation.

Manner A-2): The first shifting amount is determined through system information of the network device.

Manner A-3): The first shifting amount is determined through predefined information of a zero power communication system.

Manner A-4): The first shifting amount is determined through a spectrum supported by the terminal device.

Solution 2

In some embodiments, the network device determines the second channel based on a second rule. The second rule is related to at least one of the following parameters: the first parameter, the second parameter or the fourth parameter.

The first parameter represents a number of channels deployed by the network.

The second parameter represents an identifier associated with the terminal device.

The fourth parameter represents an index of the second target channel.

In some embodiments, a value of the first parameter is determined by at least one of the following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

The identifier associated with the terminal device includes at least one of the following: an identifier of the terminal device; a service identifier of the terminal device; or a group identifier of the terminal device.

In some embodiments, a value of the second parameter is determined through information written into the terminal device.

In some embodiments, the second target channel is the first channel on which the network device transmits the first signal, for example, a channel on which a trigger signal is located.

The network device may determine, according to Solution 1 mentioned above, the index of the first channel, that is, the index of the second target channel.

In the embodiments of the present disclosure, the operation that the network device determines the second channel based on the second rule may be implemented through the following options.

Option 2-1): The network device determines a second shifting amount. The network device determines the index of the second channel based on the second shifting amount and the fourth parameter. The network device determines the index of the second channel to be:

$$(\text{Index } T2 + \Delta 2) \bmod N;$$

where Index T2 represents the fourth parameter, and $\Delta 2$ represents the second shifting amount.

Option 2-2): The network device determines a second shifting amount. The network device determines the index of the second channel based on the second shifting amount and the fourth parameter. The network device determines the index of the second channel to be an index obtained after Index T2 is moved clockwise by $\Delta 2$ indexes in cyclic indexes, or determines the index of the second channel to be an index obtained after Index T2 is moved counterclockwise by $\Delta 2$ indexes in the cyclic indexes.

Index T2 represents the fourth parameter, $\Delta 2$ represents the second shifting amount, and the cyclic indexes include N indexes.

For the above Option 2-1) and Option 2-2), in some embodiments, the second shifting amount is determined in at least one of the following manners.

Manner B-1): The second shifting amount is determined according to the formula: ID mod N. ID represents the second parameter, N represents the first parameter, and mod represents a modulo operation.

Manner B-2): The second shifting amount is determined through system information of the network device.

Manner B-3): The second shifting amount is determined through the first signal from the network device.

Manner B-4): The second shifting amount is determined through predefined information of a zero power communication system.

Manner B-5): The second shifting amount is determined through a spectrum supported by the terminal device.

In some embodiments, the network device transmits system information. The system information may include any information according to the power sourcing demand, which may roughly include system information configured by the network itself and system information for auxiliary power sourcing. For example, the system information includes at least one piece of the following: network identification information, network radio resource information, or access resource information.

The network identification information is used to identify the network. For example, the network identification information may include information such as a name of the network device, an identifier of the network device, or an area code corresponding to the network device.

The network radio resource information includes at least one of the following: a number of channels deployed by the network, an index of the first target channel (for example, an index of a power sourcing channel), the first shifting amount, the second shifting amount, or spectrum information. The first shifting amount is used to determine an index of the first channel, and the second shifting amount is used to determine an index of the second channel.

The access resource information includes access channel information and/or access sequence information. If the terminal device needs to acquire radio resources and actively access the network to transmit information or data, the resource and signal sequence used by the terminal device to access the network are needed to be configured through the system information for the terminal device to acquire radio resources and access the network.

In some embodiments, the system information is transmitted on all or part of channels deployed by the network. For example, the network device transmits system information on all channels deployed by the network, and the terminal device may receive the system information on any one channel.

In some embodiments, the system information is transmitted periodically or the system information is triggered based on an event. For example, the event is that the network device plans to transmit a trigger signal to the terminal device, to trigger the terminal device to report information. Before the event, i.e., the network device transmits the trigger signal, the network device transmits the system information, so that the terminal device can know the channel on which the trigger signal is located, and monitor the trigger signal only on the channel.

In some embodiments, if the terminal device wants to actively access the network to transmit information or data, the terminal device may reflect the system information periodically transmitted by the network device. The network device receives the system information reflected by the terminal device, and the reflected system information is used to indicate to the network device that the terminal device requests to transmit the second signal to the network device.

It should be noted that the method for the network device may refer to the method for the terminal device side, and for example, the examples for the terminal device side may be similarly applied to the network device side.

The technical solutions of the embodiments of the present disclosure will be illustrated below with specific application examples.

Application Example 1

The application example describes how to determine the first channel exemplarily. As an example, the first channel is an initial downlink channel, the first signal transmitted on the first channel is a downlink signal (or referred to as a forward link signal), such as a trigger signal, and the terminal device is a zero power terminal.

Before the initial connection is established, the zero power terminal is in a shutdown state without power. The network device may transmit a radio signal (i.e., a power sourcing signal) to enable the zero power terminal obtain power and start the downlink communication process. Generally, a power harvesting module of the zero power terminal may support wideband reception, that is, the power harvesting module of the zero power terminal may receive the radio signal in a relatively wide bandwidth range and perform power harvesting. This means that as long as the network device transmits a downlink signal (such as a power sourcing signal or other form of signal) in the bandwidth range supported by the power harvesting module of the terminal, the zero power terminal may obtain power and activate its own circuit, that is, the zero power terminal enters the "activated" state.

After the zero power terminal is activated, the zero power terminal may start to receive a downlink signal (or referred to as a forward link signal) transmitted by the network device, such as a trigger signal. The channel bandwidth for data communication of the zero power terminal is generally limited, for example, the channel bandwidth is 200 KHz. Due to the simple structure, the zero power terminal generally only supports single-channel reception, that is, the downlink signal can be received on only one channel at the same time. On the other hand, when there are multiple downlink channels, after the zero power terminal is activated, the zero power terminal does not know on which downlink channel the network device transmits the downlink signal, and the zero power terminal needs to determine this downlink channel (that is, the initial downlink channel). The zero power terminal may determine the initial downlink channel in the following manners.

Manner 1: The zero power terminal attempts to perform signal reception on each downlink channel deployed by the network, until the initial downlink channel used for actual communication by the network device is searched.

Manner 2: The zero power terminal receives the downlink signal in a specific initial downlink channel.

For the manner 1, the zero power terminal needs to determine whether the network device transmits a downlink signal based on some features (such as a specific signal coding sequence) of the signal transmitted by the network device. This process needs to take some time, and there is also some uncertainty about when the network device transmits the downlink signal. Therefore, if the manner 1 is adopted, the zero power terminal needs to take a long time to search for the initial downlink channel on which the network device transmits the downlink signal, which results in a longer time for the network device to establish a data connection with the zero power terminal, affecting the data transmission delay. The process of determining the initial downlink channel by the zero power terminal is simplified by using the manner 2. Specifically, the specific initial downlink channel may be determined by at least one of the following solutions.

Solution 1

The channel index described below may be an index of a downlink channel or an index of a cell channel (for a scenario that channels are not distinguished into uplink channels and downlink channels).

As an implementation, an index of an initial downlink channel on which the zero power terminal monitors a trigger signal for a single zero power terminal is equal to Tag ID mod N. For example, N = 20 and Tag ID = 201, then the index of the initial downlink channel is 1 (201 mod 20 = 1). The zero power terminal monitors the trigger signal on the channel with the index of 1.

As another implementation, an index of an initial downlink channel on which the zero power terminal monitors a trigger signal for a service or group is equal to Service ID mod N or Group ID mod N. For example, N = 20 and Service ID = 27, then the index of the initial downlink channel is 7 (27 mod 20 = 7). The zero power terminal monitors the trigger signal on the channel with the index of 7.

Tag ID is an identifier of the zero power terminal. Tag ID may be an identifier written into the zero power terminal after the zero power terminal leaves the factory or is activated, or may be a short number identifier representing the zero power terminal, or the like. Service ID is a service identifier of the zero power terminal, and Group ID is a group identifier of the zero power terminal (i.e., an identifier of a group to which the zero power terminal belongs). The group may be a service group or a zero power terminal group, etc. Service ID or Group ID may be an identifier written into the terminal after the zero power tag/terminal leaves the factory or is activated. N is the number of channels deployed by the network. The number of channels deployed by the network may be acquired in the following manners.

Manner 1: The number of channels deployed by the network may be a value written into the terminal after the zero power terminal leaves the factory or is activated, for example, the number of channels is 20.

Manner 2: The number of channels deployed by the network may be a value predefined by the zero power communication system, for example, the number of channels is 20.

Manner 3: The number of channels deployed by the network may be configured in system information from the network device. For example, the number of channels for the current cell is configured to be 20 in the system information.

Manner 4: The number of channels deployed by the network may be determined based on the spectrum supported by the zero power terminal. For example, if the spectrum supported by the zero power terminal is 920 MHz to 950 MHz, the number of channels deployed by the network is 20.

Solution 2

The channel index described below may be an index of a downlink channel or an index of a cell channel (for a scenario that the channels are not distinguished into uplink channels and downlink channels).

The zero power terminal obtains an power sourcing signal, and the power sourcing signal is transmitted on only one channel. The zero power terminal obtains a target channel index (that is, an index of the power sourcing channel on which the power sourcing signal is located) by receiving the power sourcing signal. Alternatively, the zero power terminal obtains system information, and the system information is transmitted on only one channel. The zero power terminal obtains a target channel index (that is, an index of the channel on which the system information is located) by receiving the system information. Alternatively, the zero power terminal obtains a synchronization signal or synchronization information, and the synchronization signal or synchronization information is transmitted on only one channel. The zero power terminal obtains a target channel index (that is, an index of the synchronization channel on which the synchronization signal or synchronization information is located) by receiving the synchronization signal or synchronization information. Alternatively, a target channel index is configured in the system information, and the zero power terminal obtains the target channel index through the system information. Here, the target channel index corresponds to the index of the first target channel in the above solutions.

The zero power terminal obtains the shifting amount by the following manners. The shifting amount may be for the downlink channel or cell channel (for a scenario that channels are not distinguished into uplink channels and downlink channels).

The shifting amount corresponding to the initial downlink channel on which the zero power terminal monitors a trigger signal for a single zero power terminal is equal to Tag ID mod N.

The shifting amount corresponding to the initial downlink channel on which the zero power terminal monitors a trigger signal for a certain service or group is equal to Service ID mod N or Group ID mod N.

Tag ID is an identifier of the zero power terminal. Tag ID may be an identifier written into the zero power terminal after the zero power terminal leaves the factory or is activated, or may be a short number identifier representing the zero power terminal, or the like. Service ID is a service identifier of the zero power terminal, and Group ID is a group identifier of the zero power terminal (i.e., an identifier of a group to which the zero power terminal belongs). The group may be a service group or a zero power terminal group, etc. Service ID or Group ID may be an identifier written into the terminal after the zero power tag/terminal leaves the factory or is activated. N is the number of channels deployed by the network. The number of channels deployed by the network may be acquired in the following manners

Manner 1: The number of channels deployed by the network may be a value written into the terminal after the zero power terminal leaves the factory or is activated, for example, the number of channels is 20.

Manner 2: The number of channels deployed by the network may be a value predefined by the zero power communication system, for example, the number of channels is 20.

Manner 3: The number of channels deployed by the network may be configured in the system information from the network device. For example, the number of channels for the current cell is configured to be 20 in the system information.

Manner 4: The number of channels deployed by the network may be determined based on the spectrum supported by the zero power terminal. For example, if the spectrum supported by the zero power terminal is 920 MHz to 950 MHz, the number of channels deployed by the network is 20.

As an implementation, the index of the initial downlink channel on which the zero power terminal receives the trigger signal is equal to (the target channel index + shifting amount) mod N.

As another implementation, the index of the initial downlink channel on which the zero power terminal receives the trigger signal is an index obtained after the target channel index is moved clockwise or counterclockwise by the shifting amount in the cyclic indexes. For example, the cyclic indexes include 0 to 19. It is assumed that the target channel index is 15 and the shifting amount is 3. The index 15 is moved clockwise by three indexes to obtain the corresponding index 18. Then, the index of the initial downlink channel on which the zero power terminal receives the trigger signal is 18. It is assumed that the target channel index is 15 and the shifting amount is 6. The index 15 is moved clockwise by six indexes to obtain the corresponding index 1. Then, the index of the initial downlink channel on which the zero power terminal receives the trigger signal is 1.

The advantages of the above solution 1 and solution 2 are as follows. The zero power terminal does not need to monitor all channels deployed by the network or does not need to perform downlink reception in the entire spectrum range, but only needs to monitor one determined initial downlink channel, thereby achieving the power saving. In addition, since the receiving radio frequency bandwidth of the zero power terminal may be less, the processing complexity is reduced.

Application Example 2

The application example describes how to determine the second channel exemplarily. As an example, the second channel is an initial uplink channel, the second signal transmitted on the second channel is an uplink signal, such as uplink data or uplink information, and the terminal device is a zero power terminal.

The channel index described below may be an index of an uplink channel or an index of a cell channel (for the scenario that channels are not distinguished into uplink channels and downlink channels).

The zero power terminal receives a trigger signal and obtains a target channel index (that is, an index of the initial downlink channel on which the trigger signal is located). Alternatively, the zero power terminal determines the index of the initial downlink channel by using the solution related to the above application example 1, and takes the index of the initial downlink channel as the target channel index. It should be noted that the target channel index here corresponds to the index of the second target channel in the above solutions.

The zero power terminal obtains the shifting amount by the following manners. The shifting amount may be for the uplink channel or cell channel (for a scenario that the channels are not distinguished into uplink channels and downlink channels).

The shifting amount corresponding to the initial uplink channel for a single zero power terminal is equal to Tag ID mod N.

The shifting amount corresponding to the initial uplink channel for a certain service or group is equal to Service ID mod N or Group ID mod N.

The shifting amount corresponding to the initial uplink channel is carried in the trigger signal on the initial downlink channel.

The shifting amount corresponding to the initial uplink channel is configured in the system information.

The shifting amount corresponding to the initial uplink channel is defined by the protocol.

The shifting amount corresponding to the initial uplink channel is determined based on the spectrum.

Tag ID is an identifier of the zero power terminal. Tag ID may be an identifier written into the terminal after the zero power terminal leaves the factory or is activated, or the may be a short number identifier representing the zero power terminal, or the like. Service ID is a service identifier of the zero power terminal, and Group ID is a group identifier of the zero power terminal (i.e., an identifier of a group to which the zero power terminal belongs). The group may be a service group or a zero power terminal group, etc. Service ID or Group ID may be an identifier written into the terminal after the zero power tag/terminal leaves the factory or is activated. N is the number of channels deployed by the network. The number of channels deployed by the network may be acquired in the following manners.

Manner 1: The number of channels deployed by the network may be a value written into the terminal after the zero power terminal leaves the factory or is activated, for example, the number of channels is 20.

Manner 2: The number of channels deployed by the network may be a value predefined by the zero power communication system, for example, the number of channels is 20.

Manner 3: The number of channels deployed by the network may be configured in the system information from the network device. For example, the number of channels for the current cell is configured to be 20 in the system information.

Manner 4: The number of channels deployed by the network may be determined based on the spectrum supported by the zero power terminal. For example, if the spectrum supported by the zero power terminal is 920 MHz to 950 MHz, the number of channels deployed by the network is 20.

As an implementation, the index of the initial uplink channel is equal to (the target channel index + shifting amount) mod N.

As another implementation, the index of the initial uplink channel is an index obtained after the target channel index is moved clockwise or counterclockwise by the shifting amount in the cyclic indexes. For example, the cyclic indexes include 0 to 19. It is assumed that the target channel index is 15, and the shifting amount is 3. The index 15 is moved clockwise by three indexes to obtain the corresponding index 18. Then, the index of the initial uplink channel is 18. It is assumed that the target channel index is 15 and the shifting amount is 6. The index 15 is moved clockwise by six indexes to obtain the corresponding index 1. Then, the index of the initial uplink channel is 1.

According to the technical solutions of the embodiments of the present disclosure, when multiple channels are deployed by the network, the terminal device performs signal interaction with the network device by determining an appropriate channel. For signal reception, the terminal device does not need to monitor the signals from the network device on all channels, but only needs to monitor one channel (i.e., the first channel), which can achieve the power saving and reduce the working complexity of the terminal device. For signal transmission, the terminal device does not need to transmit signals to the network device on all channels, but only needs to transmit signals to the network device on one channel (i.e., the second channel), which can achieve the power saving and reduce the working complexity of the terminal device.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above specific embodiments may be combined in any suitable manner without contradiction, and various possible combinations will not be described separately in the present disclosure in order to avoid unnecessary repetition. For another example, various different embodiments of the present disclosure may be combined arbitrarily as long as the combination does not depart from the idea of the present disclosure, and the combination should also be regarded as the contents of the present application. For another example, various embodiments and/or technical features of the various embodiments in the present disclosure may be combined with the related art in any manner without conflict, and the resulting technical solutions shall also fall within the scope of protection of the present disclosure.

It should also be understood that in various method embodiments of the present disclosure, a magnitude of a sequence number of each process does not mean an execution sequence and the execution sequence of each process should be determined by its function and an internal logic and should not form any limit to an implementation process of the embodiments of the present disclosure. Furthermore, in the embodiments of the present disclosure, the terms "downlink", "uplink" and "sidelink" are used to indicate a direction of transmission of signals or data, "downlink" is used to indicate that the signal or data is transmitted in a first direction from a station to user equipment (UE) of a cell, "uplink" is used to indicate that the signal or data is transmitted in a second direction from UE of a cell to a station, and "sidelink" is used to indicate that the signal or data is transmitted in a third direction from UE 1 to UE 2. For example, "downlink signal" indicates that the signal is transmitted in the first direction. Further, in the embodiments of the present disclosure, the term "and/or" is only an association relationship describing associated objects and represents that three relationships may exist. Specifically, A and/or B may represent three conditions: i.e., independent existence of A, existence of both A and B, and independent existence of B. In addition, character "/" in the present disclosure usually represents that previous and next associated objects form an "or" relationship.

FIG. 14 is a first schematic diagram of a structural composition of a communication apparatus according to an embodiment of the present disclosure. The communication apparatus is applied to a terminal device in a zero power communication system. As illustrated in FIG. 14, the communication apparatus includes a determining unit 1401 and a communication unit 1402.

The determining unit 1401 is configured to determine a first channel and/or a second channel.

The communication unit 1402 is configured to receive a first signal transmitted by a network device on the first channel, and/or transmit a second signal to the network device on the second channel.

In some embodiments, the determining unit 1401 is configured to determine the first channel based on the first rule. The first rule is related to at least one of the following parameters: the first parameter, the second parameter or the third parameter.

The first parameter represents a number of channels deployed by the network.

The second parameter represents an identifier associated with the terminal device.

The third parameter represents an index of a first target channel.

In some embodiments, the index of the first target channel is determined by at least one of following manners.

The index of the first target channel is determined by receiving a target signal. The target signal is a signal transmitted on the first target channel.

The index of the first target channel is determined through system information of the network device.

In some embodiments, the target signal includes at least one of: a power sourcing signal, system information, a synchronization signal, or synchronization information.

In some embodiments, the determining unit 1401 is configured to determine the second channel based on the second rule. The second rule is related to at least one of the following parameters: the first parameter, the second parameter or the fourth parameter.

The first parameter represents a number of channels deployed by the network.

The second parameter represents an identifier associated with the terminal device.

The fourth parameter represents an index of a second target channel.

In some embodiments, the second target channel is the first channel on which the terminal device receives the first signal.

In some embodiments, the identifier associated with the terminal device includes at least one of: an identifier of the terminal device; a service identifier of the terminal device; or a group identifier of the terminal device.

In some embodiments, a value of the first parameter is determined by at least one of following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

In some embodiments, a value of the second parameter is determined through information written into the terminal device.

In some embodiments, the determining unit 1401 is configured to determine an index of the first channel to be ID mod N.

ID represents the second parameter, N represents the first parameter, and mod represents a modulo operation.

In some embodiments, the determining unit 1401 is configured to determine a first shifting amount, and determine an index of the first channel based on the first shifting amount and the third parameter.

In some embodiments, the determining unit 1401 is configured to determine the index of the first channel to be (Index T1 + $\Delta$1) mod N.

Index T1 represents the third parameter, and $\Delta$1 represents the first shifting amount.

In some embodiments, the determining unit 1401 is configured to determine the index of the first channel to be an index obtained after Index T1 is moved clockwise by $\Delta$1 indexes in cyclic indexes, or determine the index of the first channel to be the index of the first channel is an index obtained after Index T1 is moved counterclockwise by $\Delta$1 indexes in the cyclic indexes.

Index T1 represents the third parameter, $\Delta$1 represents the first shifting amount, and the cyclic indexes include N indexes.

In some embodiments, the first shifting amount is determined by at least one of following manners.

The first shifting amount is determined according to the formula: ID mod N. ID represents the second parameter, N represents the first parameter, and mod represents a modulo operation.

The first shifting amount is determined through system information of the network device.

The first shifting amount is determined through predefined information of a zero power communication system.

The first shifting amount is determined through a spectrum supported by the terminal device.

In some embodiments, the determining unit 1401 is configured to perform signal detection on all or part of channels deployed by the network, and determine the first channel based on detection results. The first channel is a channel on which signal transmission from the network device is detected.

In some embodiments, the determining unit 1401 is configured to determine a second shifting amount, and determine an index of the second channel based on the second shifting amount and the fourth parameter.

In some embodiments, the determining unit 1401 is configured to determine the index of the second channel to be (Index T2 + $\Delta$2) mod N.

Index T2 represents the fourth parameter, and $\Delta$2 represents the second shifting amount.

In some embodiments, the determining unit 1401 is configured to determine the index of the second channel to be an index obtained after Index T2 is moved clockwise by $\Delta$2 indexes in cyclic indexes, or determine the index of the second channel to be an index obtained after Index T2 is moved counterclockwise by $\Delta$2 indexes in the cyclic indexes.

Index T2 represents the fourth parameter, $\Delta$2 represents the second shifting amount, and the cyclic indexes include N indexes.

In some embodiments, the second shifting amount is determined by at least one of following manners.

The second shifting amount is determined according to the formula: ID mod N. ID represents the second parameter, N represents the first parameter, and mod represents a modulo operation.

The second shifting amount is determined through system information of the network device.

The second shifting amount is determined through the first signal from the network device.

The second shifting amount is determined through predefined information of a zero power communication system.

The second shifting amount is determined through a spectrum supported by the terminal device.

In some embodiments, the communication unit 1402 is configured to receive system information transmitted by the network device. The system information includes at least one piece of: network identification information, network radio resource information, or access resource information.

In some embodiments, the network radio resource information includes at least one of: a number of channels deployed by the network, an index of the first target channel, the first shifting amount, the second shifting amount, or spectrum information. The first shifting amount is used to determine an index of the first channel, and the second shifting amount is used to determine an index of the second channel.

In some embodiments, the access resource information includes access channel information and/or access sequence information.

In some embodiments, the system information is transmitted on all or part of channels deployed by the network.

In some embodiments, the system information is transmitted periodically or the system information is triggered based on an event.

In some embodiments, the communication unit 1402 is configured to reflect the system information. The reflected system information is used to instruct the network device that the terminal device requests to transmit the second signal to the network device.

In some embodiments, the first signal is used to trigger the terminal device to transmit the second signal to the network device.

Those skilled in the art should understand that the related description of the above communication apparatus according to the embodiment of the present disclosure may be understood with reference to the related description of the zero power communication method according to the embodiments of the present disclosure.

FIG. 15 is a second schematic diagram of a structural composition of a communication apparatus according to an embodiment of the present disclosure. The communication apparatus is applied to a network device in a zero power communication system. As illustrated in FIG. 15, the communication apparatus includes a determining unit 1501 and a communication unit 1502.

The determining unit 1501 is configured to determine a first channel and/or a second channel.

The communication unit 1502 is configured to transmit a first signal to a terminal device on the first channel, and/or receive the first signal transmitted by the terminal device on the second channel.

In some embodiments, the determining unit 1501 is configured to determine the first channel based on the first rule. The first rule is related to at least one of following parameters: the first parameter, the second parameter or the third parameter.

The first parameter represents a number of channels deployed by the network.

The second parameter represents an identifier associated with the terminal device.

The third parameter represents an index of a first target channel.

In some embodiments, the first target channel is used to transmit a target signal. The target signal includes at least one of: a power sourcing signal, system information, a synchronization signal, or synchronization information.

In some embodiments, the determining unit 1501 is configured to determine the second channel based on the second rule. The second rule is related to at least one of the following parameters: the first parameter, the second parameter or the fourth parameter.

The first parameter represents a number of channels deployed by the network.

The second parameter represents an identifier associated with the terminal device.

The fourth parameter represents an index of a second target channel.

In some embodiments, the second target channel is the first channel on which the network device transmits the first signal.

In some embodiments, the identifier associated with the terminal device includes at least one of: an identifier of the terminal device; a service identifier of the terminal device; or a group identifier of the terminal device.

In some embodiments, a value of the first parameter is determined by at least one of the following manners.

The value of the first parameter is determined through information written into the terminal device.

The value of the first parameter is determined through predefined information of a zero power communication system.

The value of the first parameter is determined through system information of the network device.

The value of the first parameter is determined through a spectrum supported by the terminal device.

In some embodiments, a value of the second parameter is determined through information written into the terminal device.

In some embodiments, the determining unit 1501 is configured to determine an index of the first channel to be ID mod N.

ID represents the second parameter, N represents the first parameter, and mod represents a modulo operation.

In some embodiments, the determining unit 1501 is configured to determine a first shifting amount, and determine an index of the first channel based on the first shifting amount and the third parameter.

In some embodiments, the determining unit 1501 is configured to determine the index of the first channel to be (Index T1 + $\Delta$1) mod N.

Index T1 represents the third parameter, and $\Delta$1 represents the first shifting amount.

In some embodiments, the determining unit 1501 is configured to determine the index of the first channel to be an index obtained after Index T1 is moved clockwise by $\Delta$1 indexes in cyclic indexes, or determine the index of the first channel to be an index obtained after Index T1 is moved counterclockwise by $\Delta$1 indexes in the cyclic indexes.

Index T1 represents the third parameter, $\Delta$1 represents the first shifting amount, and the cyclic indexes include N indexes.

In some embodiments, the first shifting amount is determined by at least one of the following manners.

The first shifting amount is determined according to the formula: ID mod N. ID represents the second parameter, N represents the first parameter, and mod represents a modulo operation.

The first shifting amount is determined through system information of a network device.

The first shifting amount is determined through predefined information of a zero power communication system.

The first shifting amount is determined through a spectrum supported by the terminal device.

In some embodiments, the determining unit 1501 is configured to determine a second shifting amount, and determine an index of the second channel based on the second shifting amount and the fourth parameter.

In some embodiments, the determining unit 1501 is configured to determine the index of the second channel to be (Index T2 + $\Delta$2) mod N.

Index T2 represents the fourth parameter, and $\Delta$2 represents the second shifting amount.

In some embodiments, the determining unit 1501 is configured to determine the index of the second channel to be an index obtained after Index T2 is moved clockwise by $\Delta$2 indexes in cyclic indexes, or determine the index of the second channel to be an index obtained after Index T2 is moved counterclockwise by $\Delta$2 indexes in the cyclic indexes.

Index T2 represents the fourth parameter, $\Delta$2 represents the second shifting amount, and the cyclic indexes include N indexes.

In some embodiments, the second shifting amount is determined by at least one of following manners.

The second shifting amount is determined according to the formula: ID mod N. ID represents the second parameter, N represents the first parameter, and mod represents a modulo operation.

The second shifting amount is determined through system information of the network device.

The second shifting amount is determined through the first signal from the network device.

The second shifting amount is determined through predefined information of a zero power communication system.

The second shifting amount is determined through a spectrum supported by the terminal device.

In some embodiments, the communication unit 1502 is configured to transmit system information. The system information includes at least one piece of: network identification information, network radio resource information, or access resource information.

In some embodiments, the network radio resource information includes at least one of: a number of channels deployed by the network, an index of the first target channel, the first shifting amount, the second shifting amount, or spectrum information, The first shifting amount is used to determine an index of the first channel, and the second shifting amount is used to determine an index of the second channel.

In some embodiments, the access resource information includes access channel information and/or access sequence information.

In some embodiments, the system information is transmitted on all or part of channels deployed by the network.

In some embodiments, the system information is transmitted periodically or the system information is triggered based on an event.

In some embodiments, the communication unit 1502 is configured to receive system information reflected by the terminal device. The reflected system information is used to instruct the network device that the terminal device requests to transmit the second signal to the network device.

In some embodiments, the first signal is used to trigger the terminal device to transmit the second signal to the network device.

Those skilled in the art should understand that the related description of the above communication apparatus according to the embodiment of the present disclosure may be understood with reference to the related description of the zero power communication method according to the embodiments of the present disclosure.

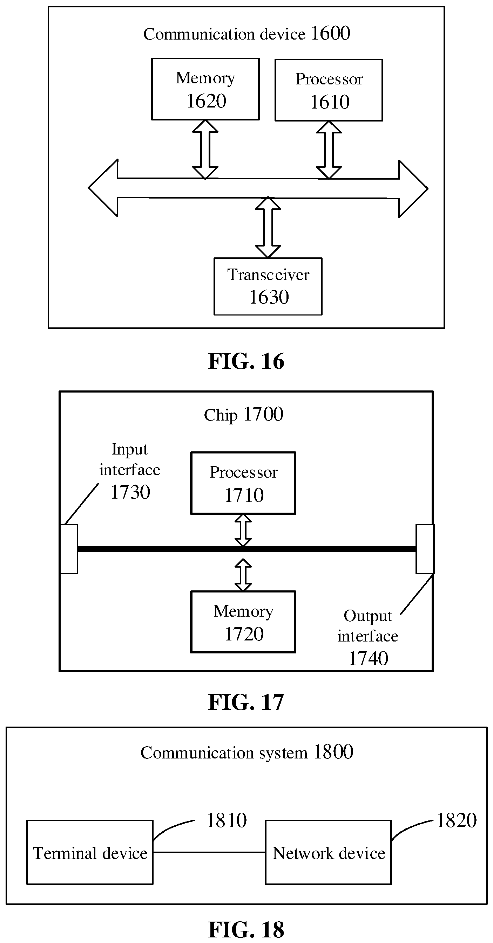

FIG. 16 is a schematic structural diagram of a communication device 1600 according to an embodiment of the present disclosure. The communication device may be a terminal device or a network device. The communication device 1600 illustrated in FIG. 16 includes a processor 1610. The processor 1610 may invoke and execute a computer program from a memory to implement the methods in the embodiments of the present disclosure.

In an embodiment, as illustrated in FIG. 16, the communication device 1600 may further include a memory 1620. The processor 1610 may invoke and execute a computer program from the memory 1620 to implement the methods in the embodiments of the present disclosure.

The memory 1620 may be a separate device independent of the processor 1610, or may be integrated in the processor 1610.

In an embodiment, as illustrated in FIG. 16, the communication device 1600 may further include a transceiver 1630. The processor 1610 may control the transceiver 1630 to communicate with other devices, specifically, may transmit information or data to other devices, or receive information or data transmitted by other devices.

The transceiver 1630 may include a transmitter and a receiver. The transceiver 1630 may further include one or more antennas.

In an embodiment, the communication device 1600 may specifically be the network device of the embodiment of the present disclosure, and the communication device 1600 may implement corresponding processes implemented by the network device in various methods of the embodiments of the present disclosure, which will not be described herein for the sake of brevity.

In an embodiment, the communication device 1600 may specifically be the mobile terminal/terminal device of the embodiment of the present disclosure, and the communication device 1600 may implement corresponding processes implemented by the mobile terminal/terminal device in various methods of the embodiments of the present disclosure, which will not be described herein for the sake of brevity.

FIG. 17 is a schematic structural diagram of a chip according to an embodiment of the present disclosure. The chip 1700 illustrated in FIG. 17 includes a processor 1710. The processor 1710 may invoke and execute a computer program from a memory to implement the methods in the embodiments of the present disclosure.

In an embodiment, as illustrated in FIG. 17, the chip 1700 may further include a memory 1720. The processor 1710 may invoke and execute a computer program from the memory 1720 to implement the methods in the embodiments of the present disclosure.

The memory 1720 may be a separate device independent of the processor 1710, or may be integrated in the processor 1710.

In an embodiment, the chip 1700 may further include an input interface 1730. The processor 1710 may control the input interface 1730 to communicate with other devices or chips, specifically, may acquire information or data transmitted by other devices or chips.

In an embodiment, the chip 1700 may further include an output interface 1740. The processor 1710 may control the output interface 1740 to communicate with other devices or chips, specifically, may output information or data to other devices or chips.

In an embodiment, the chip may be applied to the network device in the embodiments of the present disclosure, and the chip may implement the corresponding processes implemented by the network device in various methods of the embodiments of the present disclosure, which will not be described herein for the sake of brevity.

In an embodiment, the chip may be applied to the mobile terminal/ terminal device in the embodiments of the present disclosure, and the chip may implement the corresponding processes implemented by the mobile terminal/ terminal device in various methods of the embodiments of the present disclosure, which will not be described herein for the sake of brevity.

It should be understood that the chip mentioned in the embodiments of the present disclosure may also be referred to as a system-level chip, a system chip, a chip system or a system-on-chip or the like.

FIG. 18 is a schematic block diagram of a communication system 1800 according to an embodiment of the present disclosure. As illustrated in FIG. 18, the communication system 1800 includes a terminal device 1810 and a network device 1820.

The terminal device 1810 may be used to implement the corresponding functions implemented by the terminal device in the above method, and the network device 1820 may be used to implement the corresponding functions implemented by the network device in the above method, which will not be described herein for the sake of brevity.

It should be understood that the processor of the embodiments of the present disclosure may be an integrated circuit chip with a signal processing capability. During an implementation process, each operation in the above method embodiments may be completed via an integrated logic circuit of hardware in the processor or an instruction in a software form. The processor may be a universal processor, a Digital Signal Processor (DSP), an Application Specific Integrated Circuit (ASIC) and a Field Programmable Gate Array (FPGA) or other programmable logic devices, discrete gates or transistor logic devices, and discrete hardware component. Each method, operation and logic block diagram disclosed in the embodiments of the present disclosure may be implemented or executed. The universal processor may be a microprocessor or the processor may also be any conventional processor and the like. The operations of the methods disclosed in combination the embodiments of the present disclosure may be directly embodied to be executed and completed by a hardware decoding processor or executed and completed by a combination of hardware and software modules in the decoding processor. The software module may be located in a mature storage medium in the art, such as a Random Access Memory (RAM), a flash memory, a Read-Only Memory (ROM), a Programmable ROM (PROM), an Electrically EPROM (EEPROM) or a register. The storage medium is located in the memory. The processor reads information from the memory and completes the operations of the foregoing methods in combination with the hardware of the processor.

It is to be understood that the memory in the embodiments of the present disclosure may be a volatile memory or a non-volatile memory, or may include both volatile and non-volatile memories. The non-volatile memory may be a ROM, a PROM, an Erasable PROM (EPROM), an Electrically EPROM (EEPROM), or a flash memory. The volatile memory may be a Random Access Memory (RAM) used as an external cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It is to be noted that the memory of the system and method described in the present disclosure is intended to include, but not limited to, memories of these and any other proper types.

It is to be understood that the above memory is exemplarily but unlimitedly described. For example, the memory in the embodiments of the present disclosure may also be an SRAM, a DRAM, an SDRAM, a DDR SDRAM, an ESDRAM, an SLDRAM and a DR RAM. That is, the memory in the embodiments of the present disclosure is intended to include but not limited to memories of these and any other proper types.

The embodiments of the present disclosure also provide a computer-readable storage medium for storing a computer program.

In some embodiments, the computer-readable storage medium may be applied to the network device in the embodiments of the present disclosure, and the computer program enables a computer to execute the corresponding processes implemented by the network device in various methods of the embodiments of the present disclosure. For the sake of brevity, it will not be elaborated herein.

In some embodiments, the computer-readable storage medium may be applied to the mobile terminal/ terminal device in the embodiments of the present disclosure, and the computer program enables a computer to execute the corresponding processes implemented by the mobile terminal/ terminal device in various methods of the embodiments of the present disclosure. For the sake of brevity, it will not be elaborated here.

The embodiments of the present disclosure also provide a computer program product, including a computer program instruction.

In some embodiments, the computer program product may be applied to the network device in the embodiments of the present disclosure, and the computer program instruction enables a computer to execute the corresponding processes implemented by the network device in various methods of the embodiments of the present disclosure. For the sake of brevity, it will not be elaborated here.

In some embodiments, the computer program product may be applied to the mobile terminal/ terminal device in the embodiments of the present disclosure, and the computer program instruction enables a computer to execute the corresponding processes implemented by the mobile terminal/ terminal device in various methods of the embodiments of the present disclosure. For the sake of brevity, it will not be elaborated here.

The embodiments of the present disclosure also provide a computer program.

In some embodiments, the computer program may be applied to the network device in the embodiments of the present disclosure, and the computer program, when run on a computer, enables the computer to execute the corresponding processes implemented by the network device in various methods of the embodiments of the present disclosure. For the sake of brevity, it will not be elaborated here.

In some embodiments, the computer program may be applied to the mobile terminal/ terminal device in the embodiments of the present disclosure, and the computer program, when run on a computer, enables the computer to execute the corresponding processes implemented by the mobile terminal/ terminal device in various methods of the embodiments of the disclosure. For the sake of brevity, it will not be elaborated here.

Those of ordinary skill in the art may realize that the units and algorithm operations of each example described in combination with the embodiments disclosed in the present disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such realization shall fall within the scope of the present disclosure.

Those skilled in the art may clearly learn about that specific working processes of the system, apparatus and unit described above may refer to the corresponding processes in the method embodiments and will not be elaborated herein for convenient and brief description.

In some embodiments provided by the present disclosure, it is to be understood that the disclosed system, apparatus and method may be implemented in another manner. For example, the apparatus embodiment described above is only schematic, and for example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the device or the units, and may be electrical and mechanical or adopt other forms.

The units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each functional unit in each embodiment of the present disclosure may be integrated into a processing unit, each unit may also physically exist independently, and two or more than two units may also be integrated into a unit.

When being realized in form of software functional unit and sold or used as an independent product, the function may be stored in a computer-readable storage medium. Based on such an understanding, the technical solutions of the present disclosure substantially or parts making contributions to the conventional art or part of the technical solutions may be embodied in form of software product, and the computer software product is stored in a storage medium, including multiple instructions configured to enable a computer device (which may be a personal computer, a server, a network device or the like) to execute all or part of the operations of the method in each embodiment of the present disclosure. The abovementioned storage medium includes: various media capable of storing program codes such as a U disk, a mobile hard disk, a ROM, a RAM, a magnetic disk or an optical disk.

The above is only the specific implementation of the present disclosure and not intended to limit the scope of protection of the present disclosure. Any variations or replacements apparent to those skilled in the art within the technical scope disclosed by the present disclosure shall fall within the scope of protection of the present disclosure. Therefore, the scope of protection of the present disclosure shall be subject to the scope of protection of the claims.

**Claims**

1. A zero power communication method, comprising:

   determining, by a terminal device, a first channel and/or a second channel; and
   receiving, by the terminal device on the first channel, a first signal transmitted by a network device, and/or transmitting, by the terminal device on the second channel, a second signal to the network device.

2. The method of claim 1, wherein determining, by the terminal device, the first channel comprises:
   determining, by the terminal device, the first channel based on a first rule, wherein the first rule is related to at least one of following parameters:

   a first parameter representing a number of channels deployed by the network device;
   a second parameter representing an identifier associated with the terminal device; or
a third parameter representing an index of a first target channel.

3. The method of claim 2, wherein the index of the first target channel is determined through at least one of following manners:

   determining the index of the first target channel by receiving a target signal, the target signal being a signal transmitted on the first target channel; or
   determining the index of the first target channel through system information of the network device.

4. The method of claim 3, wherein the target signal comprises at least one of: a power sourcing signal, system information, a synchronization signal, or synchronization information.

5. The method of claim 1, wherein determining, by the terminal device, the second channel comprises:
   determining, by the terminal device, the second channel based on a second rule, wherein the second rule is related to at least one of following parameters:

   a first parameter representing a number of channels deployed by the network device;
   a second parameter representing an identifier associated with the terminal device; or
   a fourth parameter representing an index of a second target channel.

6. The method of claim 5, wherein the second target channel is the first channel on which the terminal device receives the first signal.

7. The method of any one of claims 2 to 6, wherein the identifier associated with the terminal device comprises at least one of:

   an identifier of the terminal device;
   a service identifier of the terminal device; or
   a group identifier of the terminal device.

8. The method of any one of claims 2 to 7, wherein a value of the first parameter is determined by at least one of following manners:

   determining the value of the first parameter through information written into the terminal device;
   determining the value of the first parameter through predefined information of a zero power communication system;
   determining the value of the first parameter through system information of the network device; or
determining the value of the first parameter through a spectrum supported by the terminal device.

9.  The method of any one of claims 2 to 8, wherein a value of the second parameter is determined through information written into the terminal device.

10. The method of any one of claims 2 to 4, wherein determining, by the terminal device, the first channel based on the first rule comprises:

     determining, by the terminal device, an index of the first channel to be ID mod N;
     wherein ID represents the second parameter, N represents the first parameter, and mod represents a modulo operation.

11. The method of any one of claims 2 to 4, wherein determining, by the terminal device, the first channel based on the first rule comprises:

     determining, by the terminal device, a first shifting amount; and
     determining, by the terminal device, an index of the first channel based on the first shifting amount and the third parameter.

12. The method of claim 11, wherein determining, by the terminal device, the index of the first channel based on the first shifting amount and the third parameter comprises:

     determining, by the terminal device, the index of the first channel to be (Index T1 +$\Delta$1) mod N;
     wherein Index T1 represents the third parameter, and $\Delta$1 represents the first shifting amount.

13. The method of claim 11, wherein determining, by the terminal device, the index of the first channel based on the first shifting amount and the third parameter comprises:

     determining, by the terminal device, the index of the first channel to be an index obtained after Index T1 is moved clockwise by $\Delta$1 indexes in cyclic indexes, or determining the index of the first channel to be an index obtained after Index T1 is moved counterclockwise by $\Delta$1 indexes in the cyclic indexes;
     wherein Index T1 represents the third parameter, $\Delta$1 represents the first shifting amount, and the cyclic indexes comprise N indexes.

14. The method of any one of claims 11 to 13, wherein the first shifting amount is determined by at least one of following manners:

     determining the first shifting amount according to a formula: ID mod N, wherein ID represents the second parameter, N represents the first parameter, and mod represents a modulo operation;
     determining the first shifting amount through system information of the network device;
     determining the first shifting amount through predefined information of a zero power communication system; or
     determining the first shifting amount through a spectrum supported by the terminal device.

15. The method of claim 1, wherein determining, by the terminal device, the first channel comprises:

     performing, by the terminal device, signal detection on all or part of channels deployed by the network device, and determining the first channel based on detection results, wherein the first channel is a channel on which signal transmission from the network device is detected.

16. The method of any one of claims 5 to 6, wherein determining, by the terminal device, the second channel based on the second rule comprises:

     determining, by the terminal device, a second shifting amount; and
     determining, by the terminal device, an index of the second channel based on the second shifting amount and the fourth parameter.

17. The method of claim 16, wherein determining, by the terminal device, the index of the second channel based on the second shifting amount and the fourth parameter comprises:

     determining, by the terminal device, the index of the second channel to be (Index T2 + $\Delta$2) mod N;
     wherein Index T2 represents the fourth parameter, and $\Delta$2 represents the second shifting amount.

18. The method of claim 16, wherein determining, by the terminal device, the index of the second channel based on the second shifting amount and the fourth parameter comprises:

     determining, by the terminal device, the index of the second channel to be an index obtained after Index T2 is moved clockwise by $\Delta$2 indexes in cyclic indexes, or determining the index of the second channel to be an index obtained after Index T2 is moved counterclockwise by $\Delta$2 indexes in the cyclic indexes;

wherein Index T2 represents the fourth parameter, ∆2 represents the second shifting amount, and the cyclic indexes comprise N indexes.

19. The method of any one of claims 16 to 18, wherein the second shifting amount is determined by at least one of following manners:

> determining the second shifting amount according to a formula: ID mod N, wherein ID represents the second parameter, N represents the first parameter, and mod represents a modulo operation;
> determining the second shifting amount through system information of the network device;
> determining the second shifting amount through the first signal from the network device;
> determining the second shifting amount through predefined information of a zero power communication system; or
> determining the second shifting amount through a spectrum supported by the terminal device.

20. The method of any one of claims 1 to 19, further comprising:
receiving, by the terminal device, system information transmitted by the network device, wherein the system information comprises at least one piece of: network identification information, network radio resource information, or access resource information.

21. The method of claim 20, wherein the network radio resource information comprises at least one of:
a number of channels deployed by the network device, an index of a first target channel, a first shifting amount, a second shifting amount, or spectrum information, wherein the first shifting amount is used to determine an index of the first channel, and the second shifting amount is used to determine an index of the second channel.

22. The method of claim 20 or 21, wherein the access resource information comprises access channel information and/or access sequence information.

23. The method of any one of claims 20 to 22, wherein the system information is transmitted on all or part of channels deployed by the network device.

24. The method of any one of claims 20 to 23, wherein the system information is transmitted periodically or the system information is triggered based on an event.

25. The method of any one of claims 20 to 24, further comprising:
reflecting, by the terminal device, the system information, wherein the reflected system information is used to instruct the network device that the terminal device requests to transmit the second signal to the network device.

26. The method of any one of claims 1 to 25, wherein the first signal is used to trigger the terminal device to transmit the second signal to the network device.

27. A zero power communication method, comprising:

> determining, by a network device, a first channel and/or a second channel; and
> transmitting, by the network device on the first channel, a first signal to a terminal device and/or receiving, by the network device on the second channel, the first signal transmitted by the terminal device.

28. The method of claim 27, wherein determining, by the network device, the first channel comprises:
determining, by the network device, the first channel based on a first rule, wherein the first rule is related to at least one of following parameters:

> a first parameter representing a number of channels deployed by the network device;
> a second parameter representing an identifier associated with the terminal device; or
> a third parameter representing an index of a first target channel.

29. The method of claim 28, wherein the first target channel is used to transmit a target signal, and the target signal comprises at least one of: a power sourcing signal, system information, a synchronization signal, or synchronization information.

30. The method of claim 27, wherein determining, by the network device, the second channel comprises:
determining, by the network device, the second channel based on a second rule, wherein the second rule is related to at least one of following parameters:

> a first parameter representing a number of channels deployed by the network device;
> a second parameter representing an identifier associated with the terminal device; or
> a fourth parameter representing an index of a second target channel.

31. The method of claim 30, wherein the second target channel is the first channel on which the network device transmits the first signal.

32. The method of any one of claims 28 to 31, wherein the identifier associated with the terminal device comprises at least one of:

an identifier of the terminal device;
a service identifier of the terminal device; or
a group identifier of the terminal device.

33. The method of any one of claims 28 to 32, wherein a value of the first parameter is determined by at least one of following manners:

 determining the value of the first parameter through information written into the terminal device;
 determining the value of the first parameter through predefined information of a zero power communication system;
 determining the value of the first parameter through system information of the network device; or
 determining the value of the first parameter through a spectrum supported by the terminal device.

34. The method of any one of claims 28 to 33, wherein a value of the second parameter is determined through information written into the terminal device.

35. The method of any one of claims 28 to 29, wherein determining, by the network device, the first channel based on the first rule comprises:

 determining, by the network device, an index of the first channel to be ID mod N;
 wherein ID represents the second parameter, N represents the first parameter, and mod represents a modulo operation.

36. The method of any one of claims 28 to 29, wherein determining, by the network device, the first channel based on the first rule comprises:

 determining, by the network device, a first shifting amount; and
 determining, by the network device, an index of the first channel based on the first shifting amount and the third parameter.

37. The method of claim 36, wherein determining, by the network device, the index of the first channel based on the first shifting amount and the third parameter comprises:

 determining, by the network device, the index of the first channel to be (Index T1 + $\Delta$1) mod N;
 wherein Index T1 represents the third parameter, and $\Delta$1 represents the first shifting amount.

38. The method of claim 36, wherein determining, by the network device, the index of the first channel based on the first shifting amount and the third parameter comprises:

 determining, by the network device, the index of the first channel to be an index obtained after Index T1 is moved clockwise by $\Delta$1 indexes in cyclic indexes, or determining the index of the first channel to be an index obtained after Index T1 is moved counterclockwise by $\Delta$1 indexes in the cyclic indexes;
 wherein Index T1 represents the third parameter, $\Delta$1 represents the first shifting amount, and the cyclic indexes comprise N indexes.

39. The method of any one of claims 36 to 38, wherein the first shifting amount is determined by at least one of following manners:

 determining the first shifting amount according to a formula: ID mod N, wherein ID represents the second parameter, N represents the first parameter, and mod represents a modulo operation;
 determining the first shifting amount through system information of the network device;
 determining the first shifting amount through predefined information of a zero power communication system; or
 determining the first shifting amount through a spectrum supported by the terminal device.

40. The method of any one of claims 30 to 31, wherein determining, by the network device, the second channel based on the second rule comprises:

 determining, by the network device, a second shifting amount; and
 determining, by the network device, an index of the second channel based on the second shifting amount and the fourth parameter.

41. The method of claim 40, wherein determining, by the network device, the index of the second channel based on the second shifting amount and the fourth parameter comprises:

 determining, by the network device, the index of the second channel to be (Index T2 + $\Delta$2) mod N;
 wherein Index T2 represents the fourth parameter, and $\Delta$2 represents the second shifting amount.

42. The method of claim 40, wherein determining, by the network device, the index of the second channel based on the second shifting amount and the fourth parameter comprises:

 determining, by the network device, the index of the second channel to be an index obtained after Index T2 is moved clockwise by ∆2 indexes in cyclic indexes, or determining the index of the second channel to be an index obtained after Index T2 is moved counterclockwise by ∆2 indexes in the cyclic indexes;

wherein Index T2 represents the fourth parameter, ∆2 represents the second shifting amount, and the cyclic indexes comprise N indexes.

43. The method of any one of claims 40 to 42, wherein the second shifting amount is determined by at least one of following manners:

determining the second shifting amount according to a formula: ID mod N, wherein ID represents the second parameter, N represents the first parameter, and mod represents a modulo operation;
determining the second shifting amount through system information of the network device;
determining the second shifting amount through the first signal from the network device;
determining the second shifting amount through predefined information of a zero power communication system; or
determining the second shifting amount through a spectrum supported by the terminal device.

44. The method of any one of claims 27 to 43, further comprising:
transmitting, by the network device, system information, wherein the system information comprises at least one piece of: network identification information, network radio resource information, or access resource information.

45. The method of claim 44, wherein the network radio resource information comprises at least one of:
a number of channels deployed by the network device, an index of a first target channel, a first shifting amount, a second shifting amount, or spectrum information, wherein the first shifting amount is used to determine an index of the first channel, and the second shifting amount is used to determine an index of the second channel.

46. The method of claim 44 or 45, wherein the access resource information comprises access channel information and/or access sequence information.

47. The method of any one of claims 44 to 46, wherein the system information is transmitted on all or part of channels deployed by the network device.

48. The method of any one of claims 44 to 47, wherein the system information is transmitted periodically or the system information is triggered based on an event.

49. The method of any one of claims 44 to 48, further comprising:
receiving, by the network device, system information reflected by the terminal device, wherein the reflected system information is used to instruct the network device that the terminal device requests to transmit the second signal to the network device.

50. The method of any one of claims 27 to 49, wherein the first signal is used to trigger the terminal device to transmit the second signal to the network device.

51. A communication apparatus, applied to a terminal device in a zero power communication system, comprising:

a determining unit, configured to determine a first channel and/or a second channel; and
a communication unit, configured to receive a first signal transmitted by a network device on the first channel, and/or transmit a second signal to the network device on the second channel.

52. A communication apparatus, applied to a network device in a zero power communication system, comprising:

a determining unit, configured to determine a first channel and/or a second channel; and
a communication unit, configured to transmit a first signal to a terminal device on the first channel, and/or receive the first signal transmitted by the terminal device on the second channel.

53. A terminal device comprising: a processor and a memory, wherein the memory is configured to store a computer program, and the processor is configured to invoke and execute a computer program stored in the memory to perform the method of any one of claims 1 to 26.

54. A network device comprising: a processor and a memory, wherein the memory is configured to store a computer program, and the processor is configured to invoke and execute a computer program stored in the memory to perform the method of any one of claims 27 to 50.

55. A chip comprising: a processor, wherein the processor is configured to invoke and execute a computer program from a memory to cause a device on which the chip is mounted to perform the method of any one of claims 1 to 26 or the method of any one of claims 27 to 50.

**56.** A computer readable storage medium for storing a computer program, wherein the computer program causes a computer to perform the method of any one of claims 1 to 26, or the method of any one of claims 27 to 50.

**57.** A computer program product comprising computer program instructions, wherein the computer program instructions cause a computer to perform the method of any one of claims 1 to 26 or the method of any one of claims 27 to 50.

**58.** A computer program causing a computer to perform the method of any one of claims 1 to 26, or the method of any one of claims 27 to 50.

**FIG. 1**

**FIG. 2**

**FIG. 3**

**FIG. 4**

1  0  1  1  0  0  1  0  1  0  0  1  0  1  1

**FIG. 5**

1  0  1  1  0  0  1  0  1  0  0  1  0  1  1

**FIG. 6**

1   0   1   1   0   0   1   0   1   0   0   1   0   1   1

**FIG. 7**

1   0   1   1   0   0   1   0   1   0   0   1   0   1   1

**FIG. 8**

1 0 1 1 0 0 1 0 1 0 0 1 0 1 1

**FIG. 9**

| |
|---|
| A terminal device determines a first channel and/or a second channel |

1001

| |
|---|
| The terminal device receives a first signal transmitted by a network device on the first channel, and/or transmits a second signal to the network device on the second channel |

1002

**FIG. 10**

| |
|---|
| |
| Channel (n+2) |
| Channel (n+1) |
| Channel n |
| ⋮ |
| Channel 4 |
| Channel 3 |
| Channel 2 |
| Channel 1 |

Power sourcing channel

**FIG. 11**

**FIG. 12-1**

**FIG. 12-2**

A network device determines a first channel and/or a second channel

/1301

The network device transmits a first signal to a terminal device on the first channel, and/or receives the first signal transmitted by the terminal device on the second channel

/1302

**FIG. 13**

Communication apparatus

Determining unit
1401

Communication unit
1402

**FIG. 14**

Communication apparatus

Determining unit
1501

Communication unit
1502

**FIG. 15**

Communication device 1600

Memory 1620

Processor 1610

Transceiver 1630

**FIG. 16**

Chip 1700

Input interface 1730

Processor 1710

Memory 1720

Output interface 1740

**FIG. 17**

Communication system 1800

Terminal device 1810

Network device 1820

**FIG. 18**

## INTERNATIONAL SEARCH REPORT

| International application No. |
|---|
| **PCT/CN2022/124616** |

| A. | CLASSIFICATION OF SUBJECT MATTER |
|---|---|
| | H04L 27/00(2006.01)i |

According to International Patent Classification (IPC) or to both national classification and IPC

| B. | FIELDS SEARCHED |
|---|---|

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, ENTXTC, CNKI, 3GPP: 标签, 低功耗, 电子标签, 零功耗, 确定, 上行, 射频标签, 通道, 无源, 下行, 信道, 选择, 资源, RFID, tag, low power, electronic tag, zero power, determin+, uplink, radio frequency tag, channel, passive, downlink, select+, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2018218687 A1 (HUAWEI TECHNOLOGIES CO., LTD.) 06 December 2018 (2018-12-06)<br>description, page 11, line 16 to page 24, line 13, and figures 2 and 5 | 1-58 |
| X | CN 114765518 A (DATANG MOBILE COMMUNICATIONS EQUIPMENT CO., LTD.) 19 July 2022 (2022-07-19)<br>description, paragraphs [0133]-[0275], and figure 2 | 1-58 |
| A | CN 103220796 A (CHINA ACADEMY OF TELECOMMUNICATIONS TECHNOLOGY) 24 July 2013 (2013-07-24)<br>description, paragraphs 87-89 | 1-58 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2023** | **13 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/124616**

| Patent document cited in search report | | | Publication date (day/month/year) | Patent family member(s) | | | Publication date (day/month/year) |
|---|---|---|---|---|---|---|---|
| WO | 2018218687 | A1 | 06 December 2018 | CA | 3065623 | A1 | 06 December 2018 |
| | | | | BR | 112019025413 | A2 | 23 June 2020 |
| | | | | EP | 3634050 | A1 | 08 April 2020 |
| | | | | EP | 3634050 | A4 | 06 May 2020 |
| | | | | KR | 20200008619 | A | 28 January 2020 |
| | | | | KR | 102256448 | B1 | 25 May 2021 |
| | | | | JP | 2020522929 | A | 30 July 2020 |
| | | | | JP | 6910475 | B2 | 28 July 2021 |
| | | | | US | 2020107294 | A1 | 02 April 2020 |
| | | | | US | 11445472 | B2 | 13 September 2022 |
| CN | 114765518 | A | 19 July 2022 | WO | 2022152068 | A1 | 21 July 2022 |
| CN | 103220796 | A | 24 July 2013 | WO | 2013107368 | A1 | 25 July 2013 |

Form PCT/ISA/210 (patent family annex) (July 2022)